(19) Europäisches Patentamt
European Patent Office
Office européen des brevets

(11) **EP 4 708 083 A1**

(12) **EUROPEAN PATENT APPLICATION**

(43) Date of publication:
**11.03.2026 Bulletin 2026/11**

(21) Application number: **25194693.5**

(22) Date of filing: **07.08.2025**

(51) International Patent Classification (IPC):
***G06F 17/11*** *(2006.01)*

(52) Cooperative Patent Classification (CPC):
**G06F 17/11**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.09.2024 JP 2024155206**

(71) Applicant: **Kabushiki Kaisha Toshiba**
**Minato-ku**
**Tokyo 105-0023 (JP)**

(72) Inventors:
• **KASHIMATA, Tomoya**
**Tokyo (JP)**
• **YAMASAKI, Masaya**
**Tokyo (JP)**
• **HAMAKAWA, Yohei**
**Tokyo (JP)**
• **HIDAKA, Ryo**
**Tokyo (JP)**
• **TATSUMURA, Kosuke**
**Tokyo (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, PROGRAM, AND CIRCUIT INFORMATION**

(57)    According to an arrangement, an information processing device (20) is configured to output a solution in a target optimization problem for minimizing or maximizing a target objective function, and includes a processing unit (401) configured to: provide a solver device configured to execute a solution-finding process while iteratively updating intermediate states of a solution, with an approximate problem for minimizing or maximizing an approximate function based on the target objective function ; acquire a plurality of intermediate solutions based on the intermediate states and a final solution calculated after the plurality of intermediate solutions; calculate, for each of the plurality of intermediate solutions and the final solution, an evaluation value as a solution to the target optimization problem; and output, as the solution to the target optimization problem, any selected solution selected from among the plurality of intermediate solutions and the final solution based on the evaluation value.

FIG.4

EP 4 708 083 A1

**Description**

FIELD

The present disclosure relates to an information processing device, an information processing method, a program, and circuit information.

BACKGROUND

Optimization of systems in various application fields, such as control, finance, communication, logistics, and chemistry, is often mathematically formulated as a combinatorial optimization problem. Information processing systems have been developed that implement various information processing functions, such as recognition, decision-making, and planning, by solving combinatorial optimization problems, and that enhance the efficiency of such functions.

A combinatorial optimization problem is an issue in which an objective function is defined with multiple decision variables (e.g. multiple discrete variables) that represent the state of a system to be optimized as arguments, and a combination of the values of the multiple decision variables that minimizes the defined objective function is solved. The state of the system represented by the multiple decision variables is referred to as a solution. In a combinatorial optimization problem, the number of states that can be taken as a solution increases exponentially as the number of decision variables increases. The increase in the number of states that can be taken as a solution is referred to as a combinatorial explosion. It is known that combinatorial optimization, which involves selecting one optimal solution from all possible solutions, is computationally difficult. Executing large-scale combinatorial optimization in a short period of time remains a challenging issue.

In recent years, a special-purpose device known as an Ising machine, which is designed to search for the ground state of an Ising model, has been attracting attention. The problem of searching for the ground state of an Ising model is referred to as an Ising problem. The Ising problem is a type of a combinatorial optimization problem in which the objective function, represented as a quadratic function of binary variables called an Ising spin, is minimized. The objective function in the Ising problem is referred to as an Ising energy. Many practical combinatorial optimization problems are possible to be converted into Ising problems. An Ising machine is capable of solving an Ising problem at high speed. Thus, many practical combinatorial optimization problems are also capable of solving at high speed using an Ising machine.

An information processing system that is equipped with the function of solving a combinatorial optimization problem using an Ising machine includes an Ising machine that performs search processing for the ground state of the Ising model and an information processing device that performs processing other than the search processing. In addition, the Ising model is defined by a set of coupling coefficients (J matrix) and a set of external magnetic field coefficients (h vector). The information processing device transmits Ising model data including the J matrix and the h vector to the Ising machine and receives a value of each of multiple optimized Ising spins from the Ising machine. Additionally, the Ising machine receives the Ising model data from the information processing device and sends back the values of each of the multiple Ising spins optimized to minimize the Ising energy. In this way, the information processing system transmits the Ising model data from the information processing device to the Ising machine prior to performing the ground state search processing.

Further, the information processing system equipped with the function of solving an optimization problem is not limited to using an Ising machine and can instead solve the combinatorial optimization problem using an optimization solver such as a quadratic unconstrained binary optimization (QUBO) solver or a higher-order binary optimization (HUBO) solver.

However, the optimization solver, such as Ising machine, can lack the capability to set a constraint condition. In such a case, an approximate problem that minimizes or maximizes an approximate function obtained by adding a penalty term to an objective function is provided to the optimization solver. For example, in the case where the optimization problem is a problem of minimizing an objective function, the penalty term is formulated by an equation that is zero (0) if the constraint condition is satisfied and is greater than zero (0) if the constraint condition is not satisfied.

The strength of the penalty term in the approximate function is adjusted using a coupling coefficient multiplied by the penalty term. Thus, in solving an approximate problem that minimizes or maximizes an approximate function with a strong coupling coefficient, the optimization solver has a high probability of outputting a solution that satisfies the constraint conditions, but less likely to output a high-quality solution. Conversely, in solving an approximate problem that minimizes or maximizes an approximate function with a weak coupling coefficient, the optimization solver has a high probability of outputting a high-quality solution, but less likely to output a solution that satisfies the constraint conditions.

For this reason, in solving such approximate problems, it is desirable for an information processing system equipped with the function of solving optimization problems using an optimization solver to employ a method capable of efficiently calculating a high-quality solution while satisfying the constraint conditions.

Further, an optimization solver, such as Ising machine, can have limitations on types of functions that it can handle. For example, Ising machines can only handle quadratic objective functions. Thus, in solving an optimization problem in which the degree of the objective function is greater than the degree of the function that the optimization solver can handle, the information processing system converts the objective function into a lower-order approximate function and provides the optimization solver with an approximate problem that minimizes or maximizes the lower-order approximate function.

One known method of converting a high-order objective function into a lower-order approximate function involves lowering the order by adding an auxiliary variable based on predetermined rule information. In addition, another known method of converting an arbitrary objective function into an approximate function with a restricted order involves sampling the function value of the objective function and performing machine learning on coefficients of the proxy function using the sampling result.

However, an approximate function fails to match the objective function over the entire domain. Thus, in the case of such an approximate problem, the information processing system has a low probability of outputting a high-quality solution. Accordingly, it is desirable for an information processing system equipped with a function of solving an optimization problem using an optimization solver to employ an approach capable of efficiently calculating a high-quality solution in generating such an approximate problem.

BRIEF DESCRIPTION OF THE DRAWINGS

Fig. 1 is a diagram illustrating a model of an Ising problem;
Fig. 2 is a diagram illustrating an internal variable of a simulated bifurcation algorithm;
Fig. 3 is a flowchart illustrating the processing procedure of a simulated bifurcation machine;
Fig. 4 is a diagram illustrating the configuration of an information processing system according to a first arrangement;
Fig. 5 is a diagram illustrating the configuration of an information processing system equipped with a simulated bifurcation machine;
Fig. 6 is a diagram illustrating the functional configuration of an information processing device according to a first arrangement;
Fig. 7 is a flowchart illustrating the processing procedure of a solver device;
Fig. 8 is a flowchart illustrating the processing procedure of an information processing device according to a first arrangement;
Fig. 9 is a diagram illustrating a search range of an approximate function with a large coupling coefficient;
Fig. 10 is a diagram illustrating a search range of an approximate function with a small coupling coefficient;
Fig. 11 is a diagram illustrating the functional configuration of an information processing device according to a second arrangement;
Fig. 12 is a flowchart illustrating the processing procedure of an information processing device according to the second arrangement;
Fig. 13 is a diagram illustrating the functional configuration of an information processing device according to a third arrangement;
Fig. 14 is a flowchart illustrating the processing procedure of an information processing device of the third arrangement;
Fig. 15 is a diagram illustrating function values of a target objective function (higher order) and an approximate function (R-th order);
Fig. 16 is a diagram illustrating the functional configuration of a problem conversion unit according to a fourth arrangement;
Fig. 17 is a diagram illustrating the functional configuration of an information processing device according to a fifth arrangement;
Fig. 18 is a diagram illustrating the configuration of a problem conversion unit according to the fifth arrangement;
Fig. 19 is a flowchart illustrating the processing procedure of an information processing device of the fifth arrangement;
Fig. 20 is a diagram illustrating the configuration of an information processing device according to a sixth arrangement;
Fig. 21 is a flowchart illustrating the processing procedure of an information processing device of the sixth arrangement;
Fig. 22 is a diagram illustrating an example of a target objective function, an approximate function, and an evaluation criteria value; and
Fig. 23 is a diagram illustrating an example of the hardware configuration of a computer.

DETAILED DESCRIPTION

According to an arrangement, an information processing device is configured to output a solution in a target optimization problem for minimizing or maximizing a target objective function. The information processing device includes a processing unit configured to: provide a solver device with an approximate problem for minimizing or maximizing an approximate function based on the target objective function, the solver device being configured to execute a solution-finding process while iteratively updating intermediate states of a solution; acquire, from the solver device, a plurality of intermediate solutions and a final solution, the intermediate solutions being based on the intermediate states of the solution calculated during execution of the solution-finding process for the approximate problem, the final solution representing a solution calculated after the plurality of intermediate solutions in the solution-finding process for the approximate problem; calculate, for each of the plurality of intermediate solutions and the final solution, an evaluation value indicating an evaluation as a solution to the target optimization problem; and output, as the solution to the target optimization problem, any selected solution selected from among the plurality of intermediate solutions and the final solution based on the evaluation value.

Hereinafter, exemplary arrangements of the present disclosure will be described with reference to the attached drawings.

Preliminary description

Prior to describing arrangements, terminology and techniques that form the basis of the arrangements will be described.

An optimization problem is a problem of finding a combination of values for multiple decision variables, which minimizes or maximizes an objective function. The objective function includes multiple decision variables that represent the state of the system to be optimized as arguments, and is a function of these decision variables, at least of first order or higher. For example, the objective function is represented by a polynomial that sums up multiple terms. Each of the multiple terms is a function that multiplies one or more, but no more than a predetermined number, of the multiple decision variables by a coefficient. In addition, the coefficient of each of the multiple terms is a real number and is also referred to as a weight. In such a case, each of the multiple terms that constitute the objective function is expressed by multiplying one or more of the multiple decision variables by any one of the multiple weight values. Moreover, the objective function can include a term expressed by a function such as an exponential function or a logarithmic function.

Each of the multiple decision variables can be discrete or continuous. In addition, the discrete value can represent 0 or 1, or it can be Ising spins representing -1 or +1. Additionally, the multiple decision variables included in the objective function can have some as discrete values and others as continuous values.

The state of the system represented by the multiple decision variables is referred to as a solution. The entire set of multiple solutions that the state of the system can take is referred to as a solution space. In the problem where the objective function is to be minimized, a solution that minimizes the value of the objective function is referred to as an exact solution. In the problem of minimizing an objective function, a solution that makes the value of the objective function close to the minimum value is referred to as a good solution.

Further, the optimization problem can include a constraint condition. The constraint condition represents a condition that the solution should satisfy. The constraint condition is one or more constraint equations expressed using some of the multiple decision variables included in the objective function. The constraint equations can be equalities or inequalities.

An optimization solver is a device that receives an optimization problem and solves a solution to the optimization problem. The optimization solver can be implemented using a dedicated device or semiconductor circuit, or by causing a processor to execute a program. The order (degree) of the objective function that the optimization solver is capable of handling is predetermined. Thus, for example, an optimization solver capable of solving an optimization problem that minimizes an objective function of quadratic or lower order is incapable of solving an optimization problem that minimizes an objective function of cubic or higher order.

An approximate problem refers to an optimization problem in which a solution is calculated by maximizing or minimizing an approximate function, and which is of a different formulation from the target optimization problem but capable of yielding an identical or approximating solution thereto.

For example, in a case where the target optimization problem includes constraint conditions, the approximate problem can be an unconstrained problem that is free from constraint conditions and capable of yielding an identical or approximating solution to that of the target optimization problem. In such a case, the approximate function is a function obtained by adding a term formed by multiplying a penalty function by a coupling coefficient to the objective function in the target optimization problem.

In the case where an approximate problem is a problem for minimizing an approximate function, the penalty function is greater in the case where the constraint condition is unsatisfied than in the case where the constraint condition is satisfied. For example, in an approximate problem involving minimization of an approximate function, the penalty function is zero (0) in the case where the constraint condition is satisfied and is greater than zero (0) in the case where the constraint condition is unsatisfied. On the other hands, in the case where an approximate problem is a problem for maximizing an approximate function, the penalty function is smaller in the case where the constraint condition is unsatisfied than the case where the constraint condition is satisfied. For example, in an approximate problem involving minimization of an approximate function, the penalty function is zero (0) in the case where the constraint condition is unsatisfied and is greater than zero (0) in the case where the constraint condition is satisfied.

Even in the case where an optimization solver is incapable of solving an optimization problem that includes constraint conditions, solving such an approximate problem makes it possible to obtain an identical or approximating solution to the optimization problem that includes constraint conditions.

Moreover, in the case where the constraint conditions are represented by multiple constraint equations, the penalty function does not necessarily incorporate every one of the multiple constraint equations. For example, in the case where certain constraint equations among them are incapable of being converted into a function in a form solvable by the optimization solver, the penalty function can exclude those constraint equations that are incapable of being converted into a function in a form that is solvable by the optimization solver.

Further, for example, an approximate problem is a problem in which a solution is calculated by minimizing or maximizing an approximate function in a form different from the objective function of the optimization problem to be solved, and which yields a solution identical or approximate to that of the optimization problem to be solved. In such a case, the approximate problem is a problem that is solvable by the optimization solver.

For example, assume that the optimization solver is capable of finding a solution that involves minimizing or maximizing an objective function represented by an R-th order polynomial (where R is an integer of 2 or more), and that the optimization problem to be solved involves minimizing or maximizing an objective function represented by a polynomial of higher order than R. In such a case, the approximate function is a function obtained by converting the objective function of the optimization problem to be solved into an R-th order polynomial in accordance with, for example, predetermined rule information.

Further, the objective function of the optimization problem to be solved can include terms expressed by a special function such as, for example, an exponential function or a logarithmic function. In such a case, the approximate function is a function generated by subjecting the objective function to a sampling process and a learning process. In other words, the approximate function is a function generated by performing a learning process on a function of a predetermined R-order polynomial function form, based on a training dataset (dataset) obtained by sampling the objective function. Additionally, in such a case, the objective function can include a black-box function that can only be understood through sampling.

The optimization solver, even if it is unable to solve the optimization problem due to a difference in the form of the objective function, is capable of solving such an approximate problem, thereby enabling the finding of a solution identical or approximate to that of the optimization problem with the different objective function form.

The QUBO problem is an unconstrained quadratic binary optimization problem with binary decision variables. In the QUBO problem, each of the multiple terms included in the objective function is expressed by a linear or quadratic equation of the decision variable.

The objective function of the QUBO problem is expressed by $H_{total\_QUBO}$ in Formula (1).

$$H_{total\_QUBO} = \sum_{i=1}^{N}\sum_{j=1}^{N} Q_{ij} b_i b_j = 2\sum_{i=1}^{N}\sum_{i<j}^{N} Q_{ij} b_i b_j + \sum_{i=1}^{N} Q_{ii} b_i \qquad \cdots (1)$$

N is an integer of 2 or more and represents the number of decision variables. i and j represent any integer from 1 to N, inclusive. $b_i$ is 0 or 1 and represents the i-th decision variable among the N decision variables. $b_j$ is 0 or 1 and represents the j-th decision variable among the N decision variables. $Q_{ij}$ represents the coefficient of the i-th row and j-th column included in an N × N coefficient matrix (Q). Note that, $Q_{ij} = Q_{ji}$. $Q_{ii}$ is a coefficient contained in the i-th row and i-th column of the coefficient matrix (Q), and is a coefficient multiplied by the linear term of the i-th decision variable. $Q_{ii}$ is referred to as a bias coefficient.

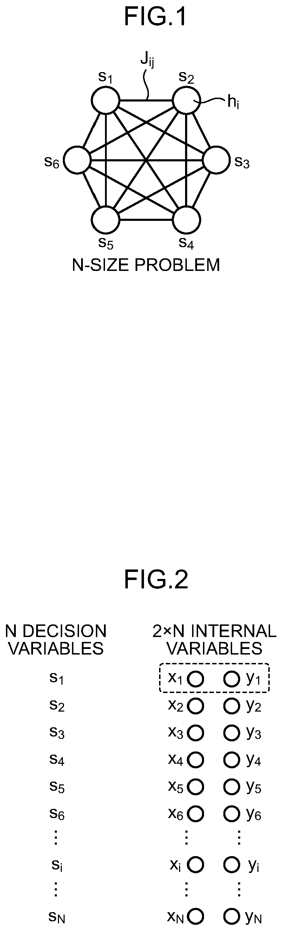

Fig. 1 illustrates a model of an Ising problem. The Ising problem is a problem of searching for the ground state of the Ising model. The Ising problem is one type of QUBO problems. The decision variables of the Ising problem represents a discrete variable taking values of -1 or +1.

The objective function of the Ising problem is expressed by $H_{total\_Ising}$ in Formula (2).

$$H_{total\_Ising} = -\frac{1}{2}\sum_{i=1}^{N}\sum_{j=1}^{N} J_{ij} s_i s_j + \sum_{i=1}^{N} h_i s_i \qquad \cdots (2)$$

N is an integer of 2 or more and represents the number of decision variables. i and j represent any integer from 1 to

N, inclusive. $s_i$ is -1 or +1 and represents the i-th decision variable among the N decision variables. $s_j$ is -1 or +1 and represents the j-th decision variable among the N decision variables. $J_{ij}$ represents the coefficient of i-th row and j-th column included in the N x N coefficient matrix (J). Note that, $J_{ij} = J_{ji}$. $h_i$ is a coefficient by which the linear term of the i-th decision variable is multiplied. $h_i$ is referred to as the bias coefficient.

The Ising problem corresponds to the problem of searching for the ground state of the Ising model, which is one of the magnetic material models in statistical mechanics. For this reason, $s_i$ can also be referred to as a spin variable. Additionally, the number N of decision variables can also be referred to as the number of spins. Furthermore, $H_{total\_Ising}$ can also be referred to as the Ising energy. A vector represented by N values of $s_i$ that result in $H_{total\_Ising}$ reaching its minimum value can also be referred to as the ground state (ground spin configuration).

The objective function of the QUBO problem and the objective function of the Ising problem differ only by constant values. Thus, the QUBO problem and the Ising problem are equivalent as optimization problems. In other words, the QUBO problem and the Ising problem can be converted into each other. For example, the Ising problem and the QUBO problem are mutually converted using Formulas (3-1), (3-2), (3-3), and (3-4).

$$s_i = 2b_i - 1 \qquad \cdots (3\text{-}1)$$

$$J_{ij} = -\frac{Q_{ij}}{2} \ (i \neq j) \qquad \cdots (3\text{-}2)$$

$$J_{ii} = 0 \qquad \cdots (3\text{-}3)$$

$$h_i = \sum_{j=1}^{N} \frac{Q_{ij}}{2} \qquad \cdots (3\text{-}4)$$

It is known that both the QUBO problem and the Ising problem are NP-complete. In other words, many NP-hard problems can be converted into the QUBO problem or the Ising problem in polynomial time. Thus, many practical optimization problems can be converted into the QUBO problem or the Ising problem.

An Ising machine is a device configured to solve an Ising problem. Many Ising machines solve an Ising problem using a heuristic solution. Various types of Ising machines based on principles, such as electronics, optics, quantum mechanics, and statistical mechanics, have been developed. Many Ising machines are capable of outputting an exact solution or a high-quality approximate solution in a short time.

The simulated bifurcation algorithm is an algorithm for solving the optimization problem. The simulated bifurcation algorithm is a heuristic solution algorithm.

The simulated bifurcation algorithm is disclosed in, for example, Non-Patent Literature 1: Hayato Goto, Kosuke Tatsumura, and Alexander R. Dixon, "Combinatorial optimization by simulating adiabatic bifurcations in nonlinear Hamiltonian systems," Science Advances, Vol. 5, eaav2372, 2019; Non-Patent Literature 2: Hayato Goto, Kotaro Endo, Masaru Suzuki, Yoshisato Sakai, Taro Kanao, Yohei Hamakawa, Ryo Hidaka, Masaya Yamasaki, and Kosuke Tatsumura, "High-performance combinatorial optimization based on classical mechanics," Science Advances, Vol. 7, eabe7953, 2021; Patent Literature 2: Japanese Unexamined Patent Application Publication No. 2021-060864; Patent Literature 3: Japanese Unexamined Patent Application Publication No. 2019-145010; Patent Literature 4: Japanese Unexamined Patent Application Publication No. 2019-159566; Patent Literature 5: Japanese Unexamined Patent Application Publication No. 2021-043667; and Patent Literature 6: Japanese Unexamined Patent Application Publication No. 2021-043589. The simulated bifurcation algorithm has been developed based on ideas inspired by quantum mechanical optimization techniques derived from the quantum adiabatic theorem, and it is also referred to as a quantum-inspired algorithm. The simulated bifurcation algorithm is capable of solving the optimization problem in which the objective function is a quadratic function of multiple decision variables. The simulated bifurcation algorithm is also capable of solving the optimization problem in which the objective function is a cubic or higher function of multiple decision variables, i.e., higher order binary optimization (HUBO) problems. For example, a simulated bifurcation algorithm that solves the HUBO problem is disclosed in Patent Literature 5: Japanese Unexamined Patent Application Publication No. 2021-043667. Additionally, the simulated bifurcation algorithm is capable of solving the optimization problems in which some or all of the multiple decision variables include continuous-value variables. A simulated bifurcation algorithm that solves optimization problems in which some or all of the multiple decision variables include continuous-value variables is disclosed in Patent Literature 6: Japanese Unexamined Patent Application Publication No. 2021-043589.

The simulated bifurcation machine is a computing device configured to execute processing in accordance with the simulated bifurcation algorithm. A simulated bifurcation machine that solves the QUBO problem or the Ising problem constitutes an example of an Ising machine. In the present arrangement, the simulated bifurcation machine solves the Ising problem.

Fig. 2 is a diagram illustrating an internal variable used in the simulated bifurcation algorithm.

In the case of solving an optimization problem in which an objective function is expressed using N decision variables ($s_1$ to $s_N$), the simulated bifurcation algorithm uses N position variables ($x_1$ to $x_N$) and N momentum variables ($y_1$ to $y_N$) as internal variables. In other words, the simulated bifurcation algorithm uses $2 \times N$ internal variables.

The N position variables ($x_i$) correspond one-to-one to the N decision variables ($s_i$). In other words, the i-th position variable ($x_i$) among the N position variables corresponds to the i-th decision variable ($s_i$) among the N decision variables. In addition, the N momentum variables ($y_i$) correspond one-to-one to the N decision variables ($s_i$). In other words, the i-th momentum variable ($y_i$) among the N momentum variables corresponds to the i-th decision variable ($s_i$) among the N decision variables.

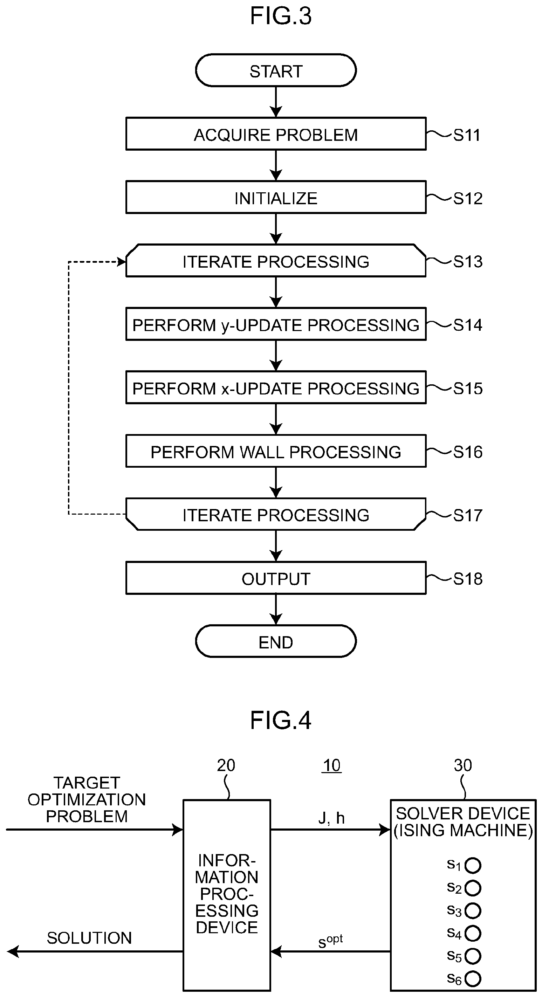

Fig. 3 is a flowchart illustrating the procedure of processing by the simulated bifurcation machine. The simulated bifurcation machine executes processing in accordance with the simulated bifurcation algorithm following the procedure illustrated in Fig. **3.**

Initially, in S11, the simulated bifurcation machine acquires an Ising problem. Specifically, the simulated bifurcation machine acquires a matrix J including $N \times N$ coefficients and a vector h including N bias coefficients.

Subsequently, in S12, the simulated bifurcation machine initializes $2 \times N$ internal variables, i.e., N position variables ($x_1$ to $x_N$) and N momentum variables ($y_1$ to $y_N$). The simulated bifurcation machine can acquire both or either of the initial values of the N position variables ($x_1$ to $x_N$) and the N momentum variables ($y_1$ to $y_N$) from external sources. In addition, the simulated bifurcation machine can generate initial values of the N position variables ($x_1$ to $x_N$) and the N momentum variables ($y_1$ to $y_N$) based on a random number generated by a random number generation circuit or can set the initial values to predetermined values. Moreover, since the simulated bifurcation machine operates heuristically, even when the same problem is given, if at least one of the initial values of the N position variables ($x_1$ to $x_N$) and the N momentum variables ($y_1$ to $y_N$) is different, the simulated bifurcation machine outputs a different high-quality approximate solution in some cases.

Then, the simulated bifurcation machine iterates the processing from S14 to S16 a preset number of times (loop processing between S13 and S17). The processing from S14 to S16 includes a matrix operation process that multiplies the N position variables ($x_1$ to $x_N$) by a matrix of weight values with N rows and N columns, and a time evolution process that evolves the N position variables ($x_1$ to $x_N$) and the N momentum variables ($y_1$ to $y_N$) over time.

In S14, the simulated bifurcation machine executes y-update processing that updates each of the N momentum variables ($y_1$ to $y_N$). In the update processing for the i-th momentum variable ($y_i$) in the y-update processing, the simulated bifurcation machine updates the i-th momentum variable ($y_i$) using the N position variables ($x_1$ to $x_N$), N coefficients ($J_{i,j}$), and the i-th bias coefficient ($h_i$), in which the N coefficients ($J_{i,j}$) represent the interaction between the i-th position variable ($x_i$) and the remaining (N-1) position variables ($x_1$ to $x_{i-1}$, $x_{i+1}$ to $x_N$) in the N x N matrices (J).

Subsequently, in S15, the simulated bifurcation machine executes x-update processing for updating each of the N position variables ($x_1$ to $x_N$). In the update processing of the i-th position variable ($x_i$) in the x-update processing, the simulated bifurcation machine updates the i-th position variable ($x_i$) based on the i-th momentum variable ($y_i$).

Moreover, the simulated bifurcation machine can execute the processing of S14 and S15 in reverse order.

Then, in S16, the simulated bifurcation machine executes wall processing on those of the N position variables ($x_1$ to $x_N$) having absolute values exceeding one (1). Furthermore, the simulated bifurcation machine also executes wall processing on the momentum variables corresponding to position variables having absolute values exceeding one (1). For example, during the wall processing, the simulated bifurcation machine changes the value of a position variable having an absolute value exceeding one (1) to a value having the same sign but with an absolute value equal to or less than one (1). Additionally, for example, in the wall processing, the simulated bifurcation machine changes the value of a momentum variable corresponding to a position variable having an absolute value exceeding one (1) to zero (0).

The simulated bifurcation algorithm includes variations in the operation of the x-update processing, y-update processing, and wall processing. For example, variations of the simulated bifurcation algorithm include the adiabatic simulated bifurcation (aSB) algorithm, the ballistic simulated bifurcation (bSB) algorithm, and the discrete simulated bifurcation (dSB) algorithm.

In the case of executing processing in accordance with the adiabatic simulated bifurcation algorithm, the simulated bifurcation machine executes the operation indicated in Formula (4-1) during the y-update processing (S14), and executes the operation indicated in Formula (4-2) during the x-update processing (S15). Moreover, in the case of executing processing in accordance with the adiabatic simulated bifurcation algorithm, the simulated bifurcation machine does not execute wall processing (S15).

$$y_i(t_{k+1}) = y_i(t_k)$$

$$+ \left\{ -Kx_i^3(t_k) - [a_0 - a(t_k)]x_i(t_k) - \eta h_i \right.$$

$$\left. + c_0 \sum_{j=1}^{N} J_{i,j}\, x_j(t_k) \right\} \Delta_t \qquad \cdots (4\text{-}1)$$

$$x_i(t_{k+1}) = x_i(t_k) + a_0 y_i(t_{k+1})\Delta_t \qquad \cdots (4\text{-}2)$$

In the case of executing processing in accordance with the ballistic simulated bifurcation algorithm, the simulated bifurcation machine executes the operation indicated in Formula (5-1) during the y-update processing (S14), the operation indicated in Formula (5-2) during the x-update processing (S15), and the operation indicated in Formula (5-3) during the wall processing (S16).

$$y_i(t_{k+1}) = y_i(t_k)$$

$$+ \left\{ -[a_0 - a(t_k)]x_i(t_k) - \eta h_i + c_0 \sum_{j=1}^{N} J_{i,j}\, x_j(t_k) \right\} \Delta_t \qquad \cdots (5\text{-}1)$$

$$x_i(t_{k+1}) = x_i(t_k) + a_0 y_i(t_{k+1})\Delta_t \qquad \cdots (5\text{-}2)$$

$$\text{if } |x_i(t_{k+1})| > 1, \text{ set } x_i(t_{k+1}) = \operatorname{sgn}\big(x_i(t_{k+1})\big) \text{ and } y_i(t_{k+1}) = 0 \qquad \cdots (5\text{-}3)$$

In the case of executing processing in accordance with the discrete simulated bifurcation algorithm, the simulated bifurcation machine executes the operation indicated in Formula (6-1) during the y-update processing (S14), the operation indicated in Formula (6-2) during the x-update processing (S15), and the operation indicated in Formula (6-3) during the wall processing (S16).

$$y_i(t_{k+1}) = y_i(t_k)$$

$$+ \left\{ -[a_0 - a(t_k)]x_i(t_k) - \eta h_i \right.$$

$$\left. + c_0 \sum_{j=1}^{N} J_{i,j}\, \operatorname{sgn}[x_i(t_k)] \right\} \Delta_t \qquad \cdots (6\text{-}1)$$

$$x_i(t_{k+1}) = x_i(t_k) + a_0 y_i(t_{k+1})\Delta_t \qquad \cdots (6\text{-}2)$$

$$\text{if } |x_i(t_{k+1})| > 1, \text{ set } x_i(t_{k+1}) = \operatorname{sgn}\big(x_i(t_{k+1})\big) \text{ and } y_i(t_{k+1}) = 0 \qquad \cdots (6\text{-}3)$$

Note that, in Formulas (4-1), (4-2), (5-1), (5-2), (5-3), (6-1), (6-2), and (6-3), $t_k$ and $t_{k+1}$ represent time points. $t_{k+1}$ is the time obtained by adding a unit time ($\Delta t$) to time $t_k$.

$x_i(t_k)$ represents the value of the i-th position variable ($x_i$) at time $t_k$. $x_i(t_{k+1})$ represents the value of the i-th position variable ($x_i$) at time $t_{k+1}$. $y_i(t_k)$ represents the value of the i-th momentum variable ($y_i$) at time $t_k$. $y_i(t_{k+1})$ represents the value

of the i-th momentum variable ($y_i$) at time $t_{k+1}$.

K, $a_0$, $\eta$, and $c_0$ are predetermined constants. $a(t_k)$ is a function that varies with time. For example, $a(t_k)$ is a positive real number that increases as time increases, with $a(t_1) = 0$, and is a function that becomes $a_0$ at the termination time T (i.e., $a(T) = a_0$). Additionally, $sgn(x_i(t_k))$ is a function that outputs the sign of the i-th position variable ($x_i$) at time $t_k$ and is +1 if $x_i(t_k)$ is greater than or equal to zero, and -1 if $x_i(t_k)$ is less than zero.

In the case where the simulated bifurcation machine executes the processing from S14 to S16 a predetermined number of times, i.e., the case where the operation is executed until the time t reaches the final time T, the loop between S13 and S17 is exited, and the process proceeds to S18.

In S18, the simulated bifurcation machine outputs N position variables ($x_1$ to $x_N$) at the final time, or N decision variables ($s_1$ to $s_N$), which are calculated based on the N position variables ($x_1$ to $x_N$) at the final time. The simulated bifurcation machine calculates the i-th decision variable ($s_i$) from the N decision variables ($s_1$ to $s_N$) based on $sgn(x_i)$.

Once the processing of S18 is completed, the simulated bifurcation machine terminates the processing in accordance with the simulated bifurcation algorithm.

Moreover, the number of iterations of the time-evolution processing (i.e., the loop processing between S13 and S17) is determined in advance depending on the intended application. The computational load required for a single operation of processing in the time-evolution processing (i.e., single processing of S14 to S16) does not vary. For this reason, the simulated bifurcation machine is capable of reducing fluctuations in the solution-finding time. Thus, even if the simulated bifurcation machine is applied to a real-time system subject to temporal constraints requiring that the processing be completed within a predetermined time, the simulated bifurcation machine is capable of reliably outputting a solution within a specified period of time.

Further, as disclosed, for example, in Patent Literature 2: Japanese Unexamined Patent Application Publication No. 2021-060864, the simulated bifurcation machine can be configured using a dedicated parallel processing circuit including a large number of arithmetic units. This allows the simulated bifurcation machine to significantly shorten the computation time for one processing operation in time-evolution processing. In addition, unlike software-based processing, the simulated bifurcation machine implemented in a dedicated hardware circuit does not experience any interrupt processing, and thus the solution-finding time can be strictly fixed. For example, it is possible for the simulated bifurcation machine implemented in a dedicated hardware circuit to fix the time required to obtain a solution in terms of clock cycles. Thus, the simulated bifurcation machine implemented in a dedicated hardware circuit applied to a real-time system makes it possible to output a solution while more reliably satisfying temporal constraints.

First Arrangement

An information processing system 10 according to a first arrangement is now described. Note that an optimization problem for minimizing an objective function and an optimization problem for maximizing an objective function are equivalent if the sign of the objective function is reversed, and thus both types of problems can be solved using the same algorithm. Thus, the following describes the information processing system 10 that calculates a solution to an optimization problem for minimizing an objective function.

Fig. 4 is a diagram illustrating the configuration of the information processing system 10 according to the first arrangement. The information processing system 10 includes an information processing device 20 and a solver device 30.

The information processing device 20 receives a target optimization problem in which a target objective function is to be minimized and calculates a solution to the received target optimization problem using the solver device 30. Then, the information processing device 20 outputs the solution, which is calculated for the target optimization problem.

The information processing device 20 is a computer including a processor, as well as components other than the solver device 30, such as an accelerator, an offloader, memory, storage, sensors, actuators, a communication interface, and the like. The information processing device 20 executes processes other than those executed by the solver device 30.

The solver device 30 is an optimization solver configured to solve an optimization problem. For example, the solver device 30 can be an Ising machine implemented using hardware. For example, the solver device 30 can be implemented using an accelerator or an offloader in the information processing device 20. Alternatively, the solver device 30 can be implemented using a processor that constitutes the information processing device 20. For example, the information processing device 20 can function as the solver device 30 by executing a program.

Further, the solver device 30 can be connected to the information processing device 20 via a network. For example, the information processing device 20 can be a client terminal device on the network, and the solver device 30 can be implemented as a server or a cloud resource or the like on the network. Additionally, the information processing device 20 and the solver device 30 can be connected via a communication bus. For example, the information processing device 20 can be a computer, and the solver device 30 can be implemented using an external device or a separate computer or the like connected to the computer via a communication bus.

For example, the solver device 30 can be a QUBO solver that solves a QUBO problem. In such a case, the information processing device 20 generates coefficient information (matrix (Q)) that specifies the QUBO problem as coefficient information and outputs it to the solver device 30. In such a case, the solver device 30 outputs ground state information ($b^{opt}$) that represents the value of each of the N decision variables ($b_1$ to $b_N$) to the information processing device 20.

Further, the solver device 30 can acquire coefficient information (matrix (Q)) that specifies the QUBO problem, reduce the QUBO problem to an Ising problem, and execute a solution-finding process. Additionally, the solver device 30 can be a HUBO solver configured to solve a HUBO problem or can be a device capable of executing a solution-finding process to minimize an objective function with variables representing continuous values for some of the N decision variables. In such cases, the information processing device 20 formulates an objective function in a form that is solvable by the solver device 30 and outputs coefficient information representing multiple coefficients included in the formulated objective function to the solver device 30.

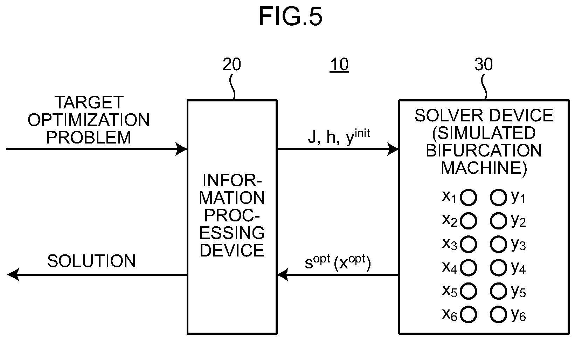

Fig. 5 is a diagram illustrating the configuration of an information processing system 10 including the solver device 30 that is implemented as a simulated bifurcation machine.

The solver device 30 can be a simulated bifurcation machine. In such a case, the information processing device 20 provides information (matrix (J) and bias coefficient (h)) used to identify an Ising problem to the simulated bifurcation machine. Furthermore, the information processing device 20 can provide initial values for N position variables ($x_1$ to $x_N$) and initial values for N momentum variables ($y_1$ to $y_N$) to the solver device 30. Additionally, the information processing device 20 can provide various constants, functions, or the like used in the simulated bifurcation algorithm (e.g., K, $a_0$, $c_0$, a(t), and $\Delta$t) to the solver device 30. Upon completion of the optimization processing, the solver device 30 can send back, as a solution, ground state information ($x^{opt}$) representing N position variables ($x_1$ to $x_N$) to the information processing device 20, instead of ground state information ($s^{opt}$) representing N decision variables ($s_1$ to $s_N$). In addition, even if the solver device 30 is a simulated bifurcation machine, the solver device 30 can acquire coefficient information (matrix (Q)) used to specify the QUBO problem, reduce the QUBO problem to an Ising problem, and execute the solution-finding process.

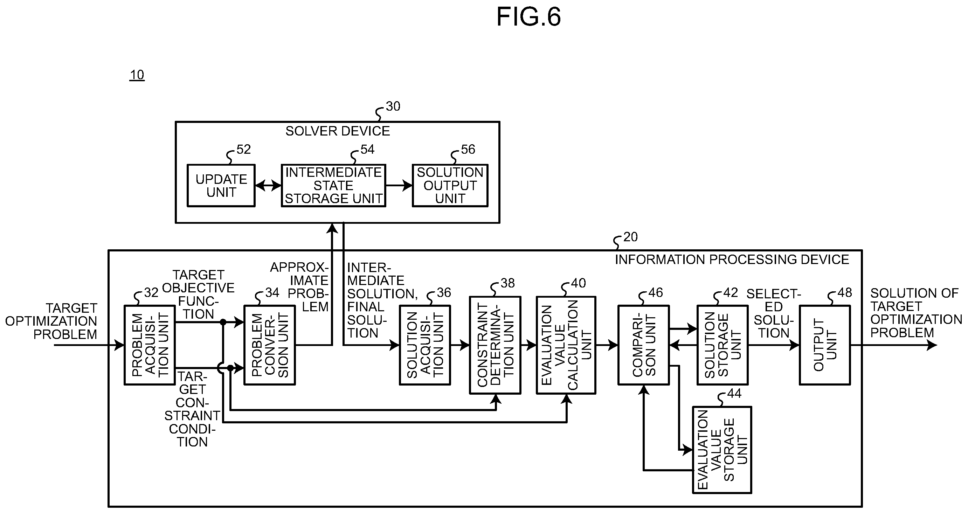

Fig. 6 is a diagram illustrating the functional configuration of the information processing device 20 and the solver device 30 according to the first arrangement.

The information processing device 20 functions as a processing unit that executes information processing, and includes a problem acquisition unit 32, a problem conversion unit 34, a solution acquisition unit 36, a constraint determination unit 38, an evaluation value calculation unit 40, a solution storage unit 42, an evaluation value storage unit 44, a comparison unit 46, and an output unit 48. The solver device 30 includes an update unit 52, an intermediate state storage unit 54, and a solution output unit 56.

The problem acquisition unit 32 acquires a target optimization problem for minimizing a target objective function under constraints imposed by target constraint conditions. The problem acquisition unit 32 provides the acquired target optimization problem to the problem conversion unit 34. In addition, the problem acquisition unit 32 provides the target objective function in the target optimization problem to the evaluation value calculation unit 40 and provides the target constraint condition to the constraint determination unit 38.

The problem conversion unit 34 converts the target optimization problem into an approximate problem. In the present arrangement, the approximate problem is an unconstrained problem for minimizing an approximate function. The approximate function is a function obtained by adding a term, which is obtained by multiplying a penalty function based on the target constraint condition by a coupling coefficient, to the target objective function of the target optimization problem. In the present arrangement, the penalty function is larger in the case where the target constraint condition is not satisfied than in the case where the target constraint condition is satisfied.

For example, the target constraint condition includes one or more constraint equations, each of which is either an equality or an inequality. For example, the problem conversion unit 34 converts each of the one or more constraint expressions included in the target constraint condition into a constraint function obtained by multiplying the square of the difference between the lefthand side and the right-hand side by a penalty coefficient. For example, in the case where the constraint expression is an equality represented in Formula (7-1), the problem conversion unit 34 generates a constraint function represented in Formula (7-2).

$$x_1 + x_2 + x_3 = 2 \qquad \cdots (7\text{-}1)$$

$$P_a(x_1 + x_2 + x_3 - 2)^2 \qquad \cdots (7\text{-}2)$$

Then, the problem conversion unit 34 generates an approximate function by incorporating a penalty function, which is derived from aggregating one or more penalty functions respectively formulated for each of the one or more constraint expressions included in the target constraint condition.

Moreover, the problem conversion unit 34 can omit reflecting some of the plurality of constraint expressions in the penalty function in the case where the target constraint conditions are represented by the plurality of constraint expressions. In one example, if the problem conversion unit 34 encounters constraint expressions among the multiple constraints that are not able to be converted into a function form solvable by the solver device 30 (e.g., a quadratic function), the problem conversion unit 34 generates an approximate problem by excluding these constraint expressions that are not able to be converted into the function form solvable by the solver device 30.

The problem conversion unit 34 provides an approximate problem for minimizing such an approximate function to the update unit 52 of the solver device 30.

The update unit 52 receives the approximate problem from the problem conversion unit 34. The update unit 52 executes the solution-finding process on the received approximate problem while iteratively updating the intermediate state of the solution. In the present arrangement, the update unit 52 calculates a solution to the approximate problem using a simulated bifurcation algorithm. In the case of calculating the solution to the approximate problem using the simulated bifurcation algorithm, the update unit 52 iteratively updates N position variables ($x_1$ to $x_N$). The N position variables ($x_1$ to $x_N$) in the simulated bifurcation algorithm represent the intermediate state of the solution.

Moreover, even when solving the approximate problem using a method other than the simulated bifurcation algorithm, the solver device 30 iteratively updates the states (values) of the N decision variables ($b_1$ to $b_N$). In such a case, the N decision variables ($b_1$ to $b_N$) during the solution-finding process represent the intermediate state of the solution.

The intermediate state storage unit 54 stores the intermediate state of the solution during the solving of the approximate problem.

The solution output unit 56 calculates an intermediate solution based on the intermediate state of the solution stored in the intermediate state storage unit 54 during the solution-finding process of the approximate problem, and outputs the calculated intermediate solution. For example, in the case of solving the approximate problem using the simulated bifurcation algorithm, the solution output unit 56 calculates an intermediate solution by binarizing each of the N position variables ($x_1$ to $x_N$) and outputs the calculated intermediate solution.

Further, the solution output unit 56 outputs the intermediate solution every time the N position variables ($x_1$ to $x_N$) are iteratively updated a predetermined number of times or at predetermined time intervals. This allows the solution output unit 56 to output multiple intermediate solutions from the start to the end of the solution-finding process.

Then, after completion of the solution-finding process, the solution output unit 56 calculates a final solution based on the intermediate state of the solution stored in the intermediate state storage unit 54 and outputs the calculated final solution. For example, after completion of the solution-finding process, the solution output unit 56 calculates a final solution by binarizing each of the N position variables ($x_1$ to $x_N$) and outputs the calculated final solution. Moreover, the final solution can be a solution calculated at the time the solution-finding process is completed or a solution calculated during the solution-finding process, as long as it is a solution calculated after multiple intermediate solutions.

The solution acquisition unit 36 acquires, from the solver device 30, multiple intermediate solutions representing solutions calculated during the solution-finding process and a final solution representing a solution calculated after multiple intermediate solutions. For example, the solution acquisition unit 36 acquires the intermediate solution every time the solver device 30 updates the intermediate state of the solution a predetermined number of times or every predetermined time interval. Then, the solution acquisition unit 36 acquires the final solution after the solver device 30 completes the solution-finding process. The solution acquisition unit 36 provides the acquired intermediate solution or final solution to the constraint determination unit 38 each time the solution acquisition unit 36 acquires an intermediate solution or a final solution.

The constraint determination unit 38 determines whether or not the acquired intermediate solution or final solution satisfies the target constraint condition each time the solution acquisition unit 36 acquires an intermediate solution or a final solution. In the case where the target constraint condition is satisfied, the constraint determination unit 38 provides the intermediate solution or final solution that satisfies the target constraint condition to the evaluation value calculation unit 40.

The evaluation value calculation unit 40 acquires the intermediate solution or final solution that satisfies the target constraint condition from the constraint determination unit 38. Each time the evaluation value calculation unit 40 acquires an intermediate solution or final solution that satisfies the target constraint condition, the evaluation value calculation unit 40 calculates an evaluation value indicating an evaluation of the acquired intermediate solution or final solution that satisfies the target constraint condition as a solution in the target optimization problem. For example, the evaluation value calculation unit 40 calculates a function value of the target objective function by assigning the acquired intermediate solution or final solution that satisfies the target constraint condition to multiple decision variables included in the target objective function. Moreover, the evaluation value calculation unit 40 can calculate the function value by assigning the acquired intermediate solution or final solution that satisfies the target constraint condition to a function that represents a portion of the target objective function. Then, the evaluation value calculation unit 40 calculates an evaluation value based on the calculated function value. In the case where the target optimization problem is a problem of minimizing the target objective function, the evaluation value indicates that a smaller function value corresponds to a better solution in the target optimization problem, and a larger function value corresponds to a worse solution in the target optimization problem.

Additionally, in the case where the target optimization problem is a problem of maximizing the target objective function, the evaluation value indicates that a larger function value corresponds to a better solution in the target optimization problem, and a smaller function value corresponds to a worse solution in the target optimization problem. Moreover, a larger evaluation value can indicate a better evaluation, or a smaller evaluation value can indicate a better evaluation. Thus, for example, in the case where a smaller value indicates a better evaluation, the evaluation value in a problem of minimizing the target objective function becomes smaller as the function value becomes smaller. In addition, in the case where a smaller value indicates a better evaluation, the evaluation value in the problem of maximizing the target objective function becomes smaller as the function value becomes larger.

The evaluation value calculation unit 40 provides a set including the intermediate solution or final solution for which the evaluation value was calculated, and the calculated evaluation value, to the comparison unit 46.

During the solution-finding process by the solver device 30, the solution storage unit 42 stores, as a selected solution, an intermediate solution or a final solution that satisfies the target constraint conditions and has the best evaluation value at the present time. The evaluation value storage unit 44 stores an evaluation value corresponding to the selected solution stored in the solution storage unit 42. Moreover, both the solution storage unit 42 and the evaluation value storage unit 44 are initialized before the solution-finding process. For example, the solution storage unit 42 can store a flag indicating the existence of a selected solution. In such a case, the flag is initialized, prior to the solution-finding process, to a value indicating that no selected solution exists, and if a selected solution that satisfies the target constraint condition and is either an intermediate solution or a final solution is written to the solution storage unit 42, the flag is changed to a value indicating that a selected solution exists.

The comparison unit 46 determines whether or not a selected solution exists each time it acquires a set including an intermediate solution or a final solution and an evaluation value from the evaluation value calculation unit 40. In other words, the comparison unit 46 determines whether or not an intermediate solution or final solution that satisfies the target constraint condition and has the best evaluation value at the present time is stored in the solution storage unit 42. If no selected solution exists, the comparison unit 46 writes the acquired intermediate solution or final solution to the solution storage unit 42 as the selected solution. Additionally, if no selected solution exists, the comparison unit 46 writes the evaluation value, which corresponds to the intermediate solution or final solution written to the solution storage unit 42, into the evaluation value storage unit 44.

Further, if a selected solution exists, the comparison unit 46 compares the evaluation value acquired from the evaluation value calculation unit 40 with the evaluation value stored in the evaluation value storage unit 44. In other words, if a selected solution exists, the comparison unit 46 compares the evaluation value acquired from the evaluation value calculation unit 40 with the evaluation value for the intermediate solution that has the best evaluation value at the present time. If the evaluation value acquired from the evaluation value calculation unit 40 is better than the evaluation value for the intermediate solution with the best evaluation value at the present time, the comparison unit 46 writes the intermediate solution or final solution acquired from the evaluation value calculation unit 40 to the solution storage unit 42 as the selected solution. In addition, if the evaluation value acquired from the evaluation value calculation unit 40 is better than the evaluation value corresponding to the intermediate solution with the best evaluation value at the present time, the comparison unit 46 writes the evaluation value acquired from the evaluation value calculation unit 40 to the evaluation value storage unit 44.

After the solution-finding process by the solver device 30 is completed, the output unit 48 outputs, as a solution to the target optimization problem, any one of the multiple intermediate solutions and final solutions that satisfy the target constraint condition and are selected based on the evaluation value. In the present arrangement, the output unit 48 outputs the selected solution stored in the solution storage unit 42 as the solution to the target optimization problem. In other words, in the present arrangement, the output unit 48 outputs, as the solution to the target optimization problem, the solution with the best evaluation value among the multiple intermediate solutions and final solutions that satisfy the target constraint condition and are calculated by the solver device 30. Moreover, if no selected solution exists after the solution-finding process by the solver device 30 is completed, **i.e.,** if no intermediate or final solution that satisfies the target constraint condition has been calculated, the output unit 48 outputs information indicating that there is no solution to the target optimization problem.

Moreover, the solution storage unit 42 can store a predetermined number of intermediate or final solutions with better evaluation values. In such a case, the evaluation value storage unit 44 stores a predetermined number of better evaluation values. Then, in such a case, the output unit 48 can select any one of the predetermined number of intermediate or final solutions with better evaluation values based on the evaluation value, and output the selected one of the solutions as a solution to the target optimization problem.

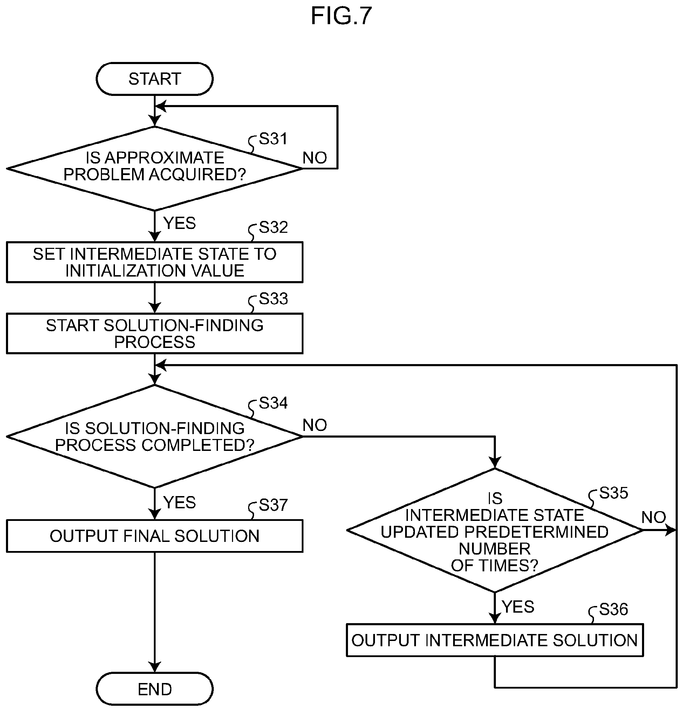

Fig. 7 is a flowchart illustrating the processing procedure by the solver device 30. In the present arrangement, the solver device 30 executes processing in accordance with the procedure illustrated in Fig. 7.

Initially, in S31, the solver device 30 determines whether or not an approximate problem is acquired from the information processing device 20. If the solver device 30 does not acquire an approximate problem (No in S31), the processing remains in a standby state at S31. If the solver device 30 acquires an approximate problem (Yes in S31), the process proceeds to S32.

In S32, the solver device 30 initializes the intermediate state. Then, in S33, the solver device 30 starts the solution-finding process of the approximate problem.

Subsequently, in S34, the solver device 30 determines whether or not the solution-finding process is completed. If the solution-finding process is not completed (No in S34), the solver device 30 proceeds to S35. In S35, the solver device 30 determines whether or not the intermediate state is updated a predetermined number of times. If the intermediate state is updated a predetermined number of times (Yes in S35), the solver device 30 proceeds to S36. If the intermediate state is not updated the predetermined number of times (No in S35), the solver device 30 proceeds to S34, and then the processing of S34 and S35 is iterated.

In S36, the solver device 30 calculates an intermediate solution based on the intermediate state and outputs the calculated intermediate solution to the information processing device 20. Upon completion of the processing in S36, the solver device 30 returns to S34, and then S34 and S35 are repeatedly executed.

If the solution-finding process is completed (Yes in S34), the solver device 30 proceeds to S37. In S37, the solver device 30 calculates a final solution based on the intermediate state and outputs the calculated final solution to the information processing device 20. Upon completion of the processing in S37, the solver device 30 terminates the processing flow.

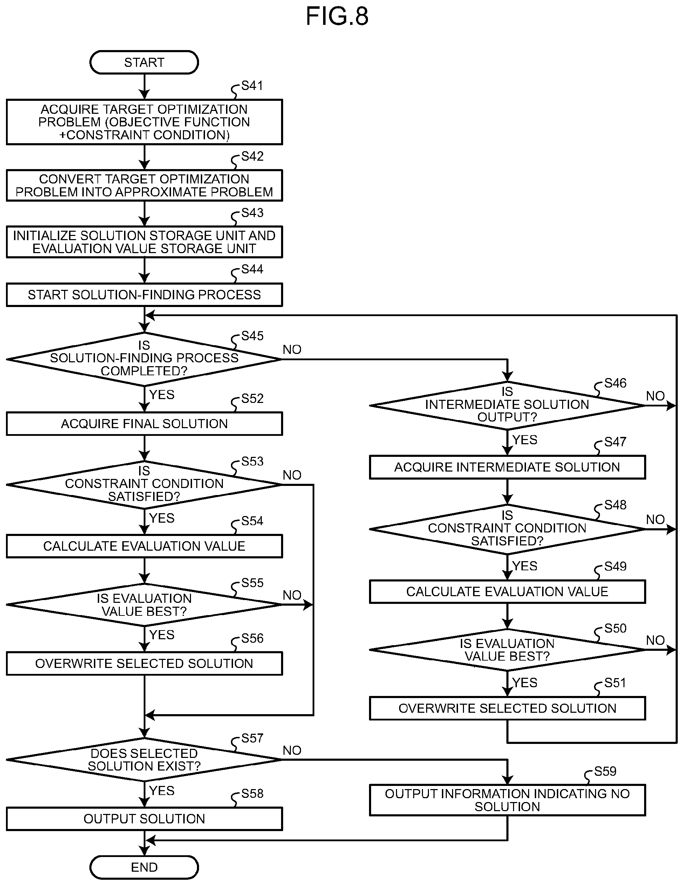

Fig. 8 is a flowchart illustrating the processing procedure by the information processing device 20 according to the first arrangement. In the present arrangement, the information processing device 20 executes the processing in accordance with the procedure illustrated in Fig. 8.

Initially, in S41, the information processing device 20 acquires a target optimization problem. The target optimization problem acquired by the information processing device 20 according to the first arrangement is a problem of minimizing a target objective function under a target constraint condition.

Subsequently, in S42, the information processing device 20 converts the acquired target optimization problem into an approximate problem. In the first arrangement, the information processing device 20 generates an approximate function by adding a term obtained by multiplying a penalty function, based on the target constraint condition, by a coupling coefficient and adding it to the target objective function of the target optimization problem.

Subsequently, in S43, the information processing device 20 initializes the solution storage unit 42 and the evaluation value storage unit 44.

Subsequently, in S44, the information processing device 20 provides the approximate problem to the solver device 30 and causes the solver device 30 to start a solution-finding process for calculating a solution to the approximate problem.

Subsequently, in S45, the information processing device 20 determines whether or not the solver device 30 completes the solution-finding process. If the solution-finding process is not completed (No in S45), the information processing device 20 proceeds to S46.

Subsequently, in S46, the information processing device 20 determines whether or not an intermediate solution is output from the solver device 30. If an intermediate solution is not output from the solver device 30 (No in S46), the information processing device 20 returns to S45. If an intermediate solution is output from the solver device 30 (Yes in S46), the information processing device 20 proceeds to S47.

In S47, the information processing device 20 acquires the intermediate solution output from the solver device 30.

Subsequently, in S48, the information processing device 20 determines whether or not the acquired intermediate solution satisfies the target constraint condition. If the acquired intermediate solution does not satisfy the target constraint condition (No in S48), the information processing device 20 returns to S45. If the acquired intermediate solution satisfies the target constraint condition (Yes in S48), the information processing device 20 proceeds to S49.

In S49, the information processing device 20 calculates an evaluation value of the acquired intermediate solution.

Subsequently, in S50, the information processing device 20 determines whether or not the evaluation value of the acquired intermediate solution is the best among the intermediate solutions that are acquired so far that satisfy the target constraint condition. If the evaluation value of the acquired intermediate solution is not the best (No in S50), the information processing device 20 returns to S45. If the evaluation value of the acquired intermediate solution is the best (Yes in S50), the information processing device 20 proceeds to S51.

In S51, the information processing device 20 writes the acquired intermediate solution into the solution storage unit 42 as a selected solution. In other words, the information processing device 20 overwrites the selected solution stored in the solution storage unit 42 with the acquired intermediate solution. In addition, the information processing device 20 overwrites the evaluation value stored in the evaluation value storage unit 44 with the acquired evaluation value. Upon completion of the processing in S51, the information processing device 20 returns to S45.

If the solution-finding process is completed (Yes in S45), the information processing device 20 proceeds to S52.

In S52, the information processing device 20 acquires a final solution outputted from the solver device 30.

Subsequently, in S53, the information processing device 20 determines whether or not the acquired final solution satisfies the target constraint condition. If the acquired final solution does not satisfy the target constraint condition (No in S53), the information processing device 20 proceeds to S57. If the acquired final solution satisfies the target constraint condition (Yes in S53), the information processing device 20 proceeds to S54.

In S54, the information processing device 20 calculates an evaluation value of the acquired final solution.

Subsequently, in S55, the information processing device 20 determines whether or not the evaluation value of the acquired final solution is the best among the intermediate solutions and final solutions that are acquired so far that satisfy the target constraint condition. If the evaluation value of the acquired final solution is not the best (No in S55), the information processing device 20 proceeds to S57. If the evaluation value of the acquired final solution is the best (Yes in S55), the information processing device 20 proceeds to S56.

In S56, the information processing device 20 writes the acquired final solution into the solution storage unit 42 as a selected solution. In other words, the information processing device 20 overwrites the selected solution stored in the solution storage unit 42 with the acquired final solution. In addition, the information processing device 20 overwrites the evaluation value stored in the evaluation value storage unit 44 with the acquired evaluation value. Upon completion of the processing in S56, the information processing device 20 proceeds to S57.

In S57, the information processing device 20 determines whether or not a selected solution exists. In other words, the information processing device 20 determines whether or not an intermediate solution or final solution that satisfies the target constraint condition exists. If a selected solution exists (Yes in S57), the information processing device 20 proceeds to S58. If no selected solution exists, **i.e.,** if the solution storage unit 42 remains in its initial state (No in S57), the information processing device 20 proceeds to S59.

In S58, the information processing device 20 outputs the selected solution stored in the solution storage unit 42 as the solution to the target optimization problem. In S59, the information processing device 20 outputs information indicating that there is no solution to the target optimization problem. Upon completion of the processing in S58 or S59, the information processing device 20 terminates the processing flow.

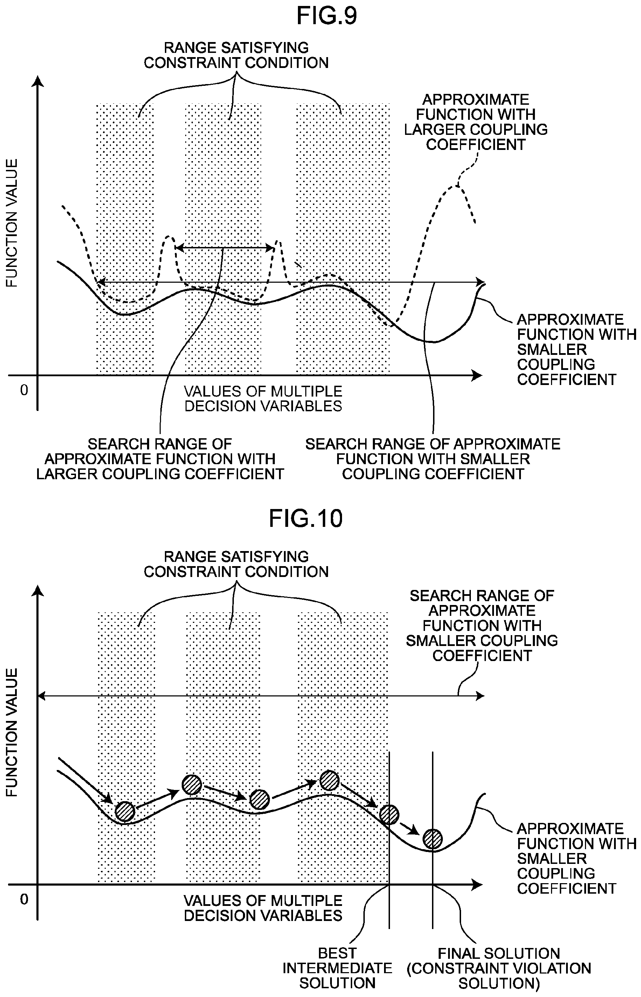

Fig. 9 is a diagram illustrating the search range of the solver device 30 in searching for an approximate function with a large coupling coefficient. Fig. 10 is a diagram illustrating the search range of the solver device 30 in searching for an approximate function with a small coupling coefficient.

In searching for a solution that minimizes an objective function by iteratively updating the intermediate state of the solution, the optimization solver often calculates a subsequent intermediate state of the solution from the current intermediate state of the solution. For example, a simulated bifurcation machine evolves a position variable and a momentum variable corresponding to each of multiple decision variables over unit time, and calculates a subsequent intermediate state of the solution from the current intermediate state of the solution.

Further, in an optimization problem that minimizes an objective function under a constraint imposed by a constraint condition, as illustrated in Fig. 9, there are cases where multiple regions that satisfy the constraint condition are separated into multiple regions in the solution space. For this reason, in the case where the solver device 30 performs the solution-finding process for an approximate function that is subject to, for example, a strong constraint, i.e., an approximate function in which a coupling coefficient by which a penalty function is multiplied is relatively large, it becomes difficult for the intermediate state of the solution to transition from one part of the constraint-satisfying region to another region, and as a result, it is difficult to perform a search with a high probability over the entirety of multiple regions that satisfy the constraint. Thus, in the case of performing the solution-finding process for an approximate function with a relatively large coupling coefficient, the solver device 30 has a low probability of outputting a highly accurate solution, i.e., a solution with a good evaluation value.

To solve such a problem, the solver device 30 can perform the solution-finding process for an approximate function that is, for example, subject to a weak constraint, as illustrated in Fig. 10, i.e., an approximate function in which a coupling coefficient by which a penalty function is multiplied is relatively small. This makes it easier for the solver device 30 to transition the intermediate state of the solution from a part of the region that satisfies the constraint to another region that satisfies the constraint condition, and enables the solver device 30 to search with a similar probability over the entirety of multiple regions that satisfy the constraint.

However, in the case where the solution-finding process is performed for an approximate function that is subject to a weak constraint, i.e., an approximate function with a relatively small coupling coefficient multiplied by the penalty function, for example, the intermediate state of the solution at the final stage of the solution-finding process falls into a region that does not satisfy the constraint, as illustrated in Fig. 10, and thus the solver device 30 is likely to calculate a final solution that does not satisfy the constraint condition. Thus, in the case of performing the solution-finding process for an approximate function that is subject to a relatively small coupling coefficient, the solver device 30 has a low probability of outputting a solution that satisfies the constraint condition.

In contrast, the information processing device 20 according to the present arrangement acquires an intermediate solution based on the intermediate state of the solution during the solution-finding process performed by the solver device 30 at every predetermined number of iterations or every predetermined time interval. Furthermore, the information processing device 20 according to the present arrangement determines whether or not the intermediate solution satisfies the target constraint condition every time an intermediate solution or a final solution is acquired, and calculates an evaluation value of the intermediate solution if the intermediate solution or the final solution satisfies the target constraint condition. Then, the information processing device 20 according to the present arrangement outputs the solution with the best evaluation value among the multiple intermediate solutions or final solutions as the solution of the target optimization problem. This configuration allows the information processing device 20 according to the present arrangement to increase the probability of outputting an intermediate solution with a good evaluation value by relatively reducing the coupling coefficient multiplied by the penalty function, thereby enabling a search across all of the multiple regions that satisfy the constraint and ultimately calculating a solution that satisfies the target constraint condition.

As described above, the information processing device 20 according to the present arrangement is capable of calculating, with high probability, a high-quality approximate solution that satisfies the target constraint.

Second Arrangement

An information processing system 10 according to a second arrangement is now described. Moreover, the information processing system 10 according to the second arrangement has substantially the same functions and configuration as the information processing system 10 according to the first arrangement. Thus, in the description of the information processing system 10 according to the second arrangement, components having substantially the same functions and configurations as those in the first arrangement are denoted by the same reference numerals, and detailed descriptions thereof are omitted except for differences.

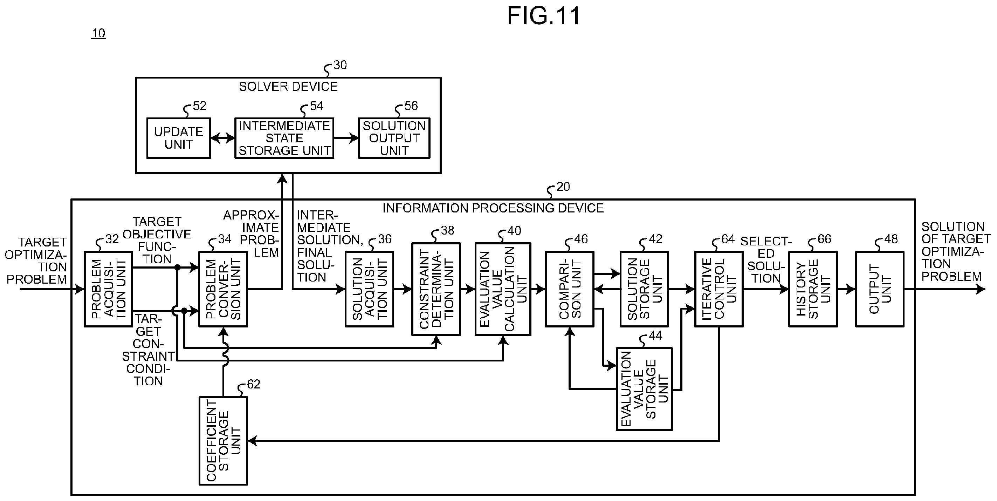

Fig. 11 is a diagram illustrating the functional configuration of an information processing device 20 and a solver device 30 according to the second arrangement.

In the second arrangement, the information processing device 20 generates M approximate problems (where M is an integer equal to or greater than 2) and calculates a selected solution for each of the M approximate problems using the solver device 30. Each of the M approximate problems involves minimizing an approximate function based on a target objective function, but the approximate functions can be mutually different. Then, in the second arrangement, the information processing device 20 outputs the best selected solution among the selected solutions calculated for each of the M approximate problems as a solution to the target optimization problem.

The information processing device 20 according to the second arrangement further includes a coefficient storage unit 62, an iterative control unit 64, and a history storage unit 66.

In the present arrangement, the problem acquisition unit 32 generates M approximate problems. In addition, in generating each of the M approximate problems, the problem conversion unit 34 converts the target optimization problem acquired by the problem acquisition unit 32 into an approximate problem based on the coupling coefficient stored in the coefficient storage unit 62. Moreover, the m-th approximate problem (where m is an integer from 1 to M, inclusive) among the M approximate problems is an optimization problem that minimizes an m-th approximate function obtained by adding the target objective function and a term obtained by multiplying a penalty function by an m-th coupling coefficient, which is a coupling coefficient.

Further, the problem conversion unit 34 sequentially generates the M approximate problems one by one. In other words, in the case where the problem conversion unit 34 receives the target optimization problem from the problem acquisition unit 32, the problem conversion unit 34 initially generates the first approximate problem among the M approximate problems. Additionally, the problem conversion unit 34 generates the p-th approximate problem (where p is an integer from 2 to M, inclusive) among the M approximate problems after calculating the selected solution for the (p-1)-th approximate problem among the M approximate problems.

The iterative control unit 64 controls the problem conversion unit 34 to generate the approximate problem by iterating the processing, for example, M times. Upon execution of the solution-finding process for the m-th approximate problem, which corresponds to the m-th iteration, the iterative control unit 64 stores the selected solution, saved in the solution storage unit 42, into the history storage unit 66, as the selected solution for the m-th iteration. Furthermore, the iterative control unit 64 stores the evaluation value stored in the evaluation value storage unit 44, obtained by executing the solution-finding process for the m-th approximate problem, into the history storage unit 66 as the evaluation value of the selected solution for the m-th iteration.

Moreover, if neither an intermediate solution nor a final solution is stored in the solution storage unit 42 as a result of executing the solution-finding process for the m-th approximate problem, i.e., if neither intermediate solution nor a final solution satisfying the constraint condition is obtained in the solution-finding process for the m-th approximate problem, the iterative control unit 64 prevents the m-th selected solution and the m-th evaluation value from being stored in the history storage unit 66.

Further, prior to generation of the first approximate problem, i.e., the first iteration, the iterative control unit 64 sets the coupling coefficients stored in the coefficient storage unit 62 to a predetermined initial value.

Then, after generating the (p-1)-th approximate problem, which corresponds to the (p-1)-th iteration, the iterative control unit 64 updates the coupling coefficient stored in the coefficient storage unit 62 before the p-th approximate problem, which is the p-th iteration, is generated. For example, the iterative control unit 64 modifies the coupling coefficient stored in the coefficient storage unit 62 based on a predetermined rule or algorithm.

For example, the iterative control unit 64 can modify the coupling coefficients to perform a full search of the configurable range of the coupling coefficients. Additionally, the iterative control unit 64 can modify the coupling coefficient to perform a grid search or Bayesian estimation. Moreover, the iterative control unit 64 can modify the coupling coefficients each time an approximate problem is generated, or, in some cases, the coupling coefficient used in the p-th approximate problem can be the same as the coupling coefficient in the (p-1)-th approximate problem.

In the present arrangement, the iterative control unit 64 modifies the p-th coupling coefficient used in the p-th approximate problem based on the (p-1)-th coupling coefficient used in the (p-1)-th approximate problem. For example, the iterative control unit 64 modifies the p-th coupling coefficient used in the p-th approximate problem by either adding or subtracting a predetermined value to or from the (p-1)-th coupling coefficient used in the (p-1)-th approximate problem, or by applying a predetermined function operation.

Further, in the present arrangement, in the case where a selected solution that satisfies the target constraint condition is not obtained for the (p-1)-th approximate problem, the iterative control unit 64 sets the p-th coupling coefficient used for the p-th approximate problem to be larger than the (p-1)-th coupling coefficient used for the (p-1)-th approximate problem. Furthermore, in the case where a selected solution that satisfies the target constraint condition is obtained for the (p-1)-th approximate problem, the iterative control unit 64 sets the p-th coupling coefficient to be smaller than the (p-1)-th coupling coefficient.

As the constraints for the approximate problem become stricter, i.e., as the coupling coefficient becomes larger, the possibility of obtaining a solution satisfying the constraint condition increases, but the search for a solution over the entire solution space becomes more restricted, decreasing the probability of obtaining the best solution. Thus, in the case where a solution that satisfies the target constraint condition is obtained in the solution-finding process of the (p-1)-th approximate problem, the iterative control unit 64 according to the present arrangement is capable of enhancing the probability of searching for a solution over the entire solution space by reducing the coupling coefficient in the solution-finding process of the p-th approximate problem. Additionally, in the case where a solution that satisfies the target constraint condition is not obtained in the solution-finding process of the (p-1)-th approximate problem, the iterative control unit 64 is capable of enhancing the probability of obtaining a solution that satisfies the target constraint condition by increasing the coupling coefficient in the solution-finding process of the p-th approximate problem.

Further, in the case where a selected solution that satisfies the target constraint condition is obtained consecutively from the $(p-P_1)$-th approximate problem (where $P_1$ is an integer equal to or greater than 2) up to the (p-1)-th approximate problem as a result of executing the solution-finding process for the (p-1)-th approximate problem, the iterative control unit 64 can set the p-th coupling coefficient to be smaller than the (p-1)-th coupling coefficient. Additionally, in the case where a selected solution that satisfies the target constraint condition is obtained consecutively from the $(p-P_2)$-th approximate problem (where $P_2$ is an integer equal to or greater than 2) up to the (p-1)-th approximate problem as a result of executing the solution-finding process for the (p-1)-th approximate problem, the iterative control unit 64 can set the p-th coupling coefficient to be larger than the (p-1)-th coupling coefficient.

Further, in the case where a selected solution that satisfies the target constraint condition is obtained as a result of the solution-finding process for the (p-1)-th approximate problem, the iterative control unit 64 can set the p-th coupling coefficient to be smaller than the (p-1)-th coupling coefficient, on the condition that the evaluation value of the selected solution obtained for the (p-1)-th approximate problem is better than a predetermined reference value. Additionally, in the case where a selected solution that satisfies the target constraint condition is obtained consecutively from the $(p-P_1)$-th approximate problem up to the (p-1)-th approximate problem as a result of the solution-finding process for the (p-1)-th approximate problem, the iterative control unit 64 can set the p-th coupling coefficient to be smaller than the (p-1)-th coupling coefficient, on the condition that the evaluation value of the selected solution obtained for the (p-1)-th approximate problem is better than a predetermined reference value. This makes it possible for the iterative control unit 64 to prevent a continuous search for a solution that satisfies the target constraint condition but has a poor evaluation value.

Further, the iterative control unit 64 can set the reference value to be lower as the coupling coefficient is made smaller. This enables the iterative control unit 64 to prevent the coupling coefficient from being excessively decreased.

Further, the iterative control unit 64 can set the first coupling coefficient used for the first approximate problem to a relatively large value, thereby causing a selected solution that satisfies the target constraint condition to be calculated at an early stage of the iteration. Then, once a selected solution that satisfies the target constraint condition is calculated, the iterative control unit 64 can generate a reference value based on the evaluation value of a predetermined number of selected solutions from the top or a predetermined percentage of the top selected solutions among the selected solution obtained from the first stage of the iterations to the stage at which a selected solution that satisfies the target constraint condition is obtained. This allows the iterative control unit 64 to determine whether or not to increase the coupling coefficient using an appropriate reference value without setting a reference value in advance.

The history storage unit 66 stores a set of the calculated solution and the evaluation value each time a solution to the approximate problem is calculated. Moreover, the history storage unit 66 can store only the solution with the best evaluation value each time a solution to the approximate problem is iteratively calculated.

The output unit 48 outputs the selected solution with the best evaluation value from among the multiple selected solutions stored in the history storage unit 66 as the solution to the target optimization problem, after the solution-finding process for the approximate problem is executed a predetermined number of times, for example, after the solution to the approximate problem is calculated M times.

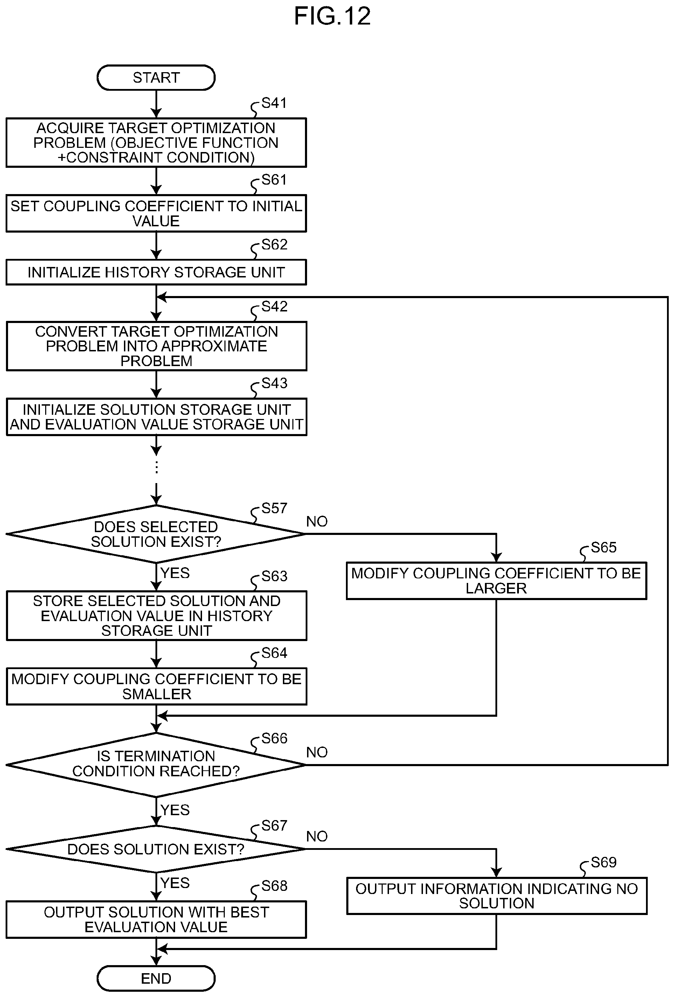

Fig. 12 is a flowchart illustrating the processing procedure of the information processing device 20 of the second arrangement. In the present arrangement, the information processing device 20 executes processing in accordance with the procedure illustrated in Fig. 12. Moreover, in the description of Fig. 12, the same processing as that illustrated in Fig. 8 is assigned the same step number.

Initially, in S41, the information processing device 20 acquires a target optimization problem. Subsequently, in S61, the information processing device 20 sets the coupling coefficients stored in the coefficient storage unit 62 to an initial value. Subsequently, in S62, the information processing device 20 initializes the history storage unit 66.

Subsequently, in S42, the information processing device 20 converts the acquired target optimization problem into an approximate problem using the coupling coefficient stored in the coefficient storage unit 62.

Subsequently, the information processing device 20 executes processing from S43 to S57. The processing from S43 to S57 is the same as the processing of the first arrangement illustrated in Fig. 8.

If the result of the determination in S57 is that a selected solution exists (Yes in S57), the information processing device 20 proceeds to S63. If the result of the determination in S57 is that a selected solution does not exist (No in S57), the information processing device 20 proceeds to S65.

In S63, the information processing device 20 pairs the selected solution stored in the solution storage unit 42 and the evaluation value stored in the evaluation value storage unit 44 and causes the pair to be stored in the history storage unit 66.

Following S63, in S64, the information processing device 20 modifies the coupling coefficient stored in the coefficient storage unit 62 to be smaller. Moreover, the information processing device 20 can modify the coefficient stored in the coefficient storage unit 62 to be smaller on the condition that a selected solution exists a predetermined number of times in succession as a result of iterating the processing from S42 to S64 a predetermined number of times. Following S64, the information processing device 20 proceeds to S66.

In S65, the information processing device 20 modifies the coupling coefficient stored in the coefficient storage unit 62 to be larger. Moreover, the information processing device 20 can modify the coefficient stored in the coefficient storage unit 62 to be larger on the condition that, as a result of iterating the processing from S42 to S64 a predetermined number of times, no selected solution exists a predetermined number of times in a row. Following S65, the information processing device 20 proceeds to S66.

In S66, the information processing device 20 determines whether or not the iteration termination condition is reached. For example, the information processing device 20 can determine that the termination condition is reached in the case where the processing from S42 to S66 has been executed M times. In addition, the information processing device 20 can determine that the termination condition is reached in the case where a predetermined time has elapsed since the start of the processing.

If the termination condition is not reached (No in S66), the information processing device 20 returns to S42 and iterates the processing from S42.

If the termination condition is reached (Yes in S66), the information processing device 20 proceeds to S67.

In S67, the information processing device 20 determines whether or not a selected solution stored in the history storage unit 66 exists. If a selected solution exists (Yes in S67), the information processing device 20 proceeds to S68. If a selected solution does not exist (No in S67), the information processing device 20 proceeds to S69.

In S68, the information processing device 20 outputs the selected solution with the best evaluation value among the selected solutions stored in the history storage unit 66 as a solution to the target optimization problem. In S69, the information processing device 20 outputs information indicating that there is no solution to the target optimization problem. Upon completion of the processing in S68 or S69, the information processing device 20 terminates the processing flow.

As described above, the information processing device 20 according to the second arrangement makes it possible to increase the possibility of searching all of the multiple regions that satisfy the constraint condition by weakening the coupling coefficient as much as possible within the range that satisfies the constraint. As a result, the information processing device 20 according to the second arrangement described above makes it possible to calculate a high-quality approximate solution that satisfies the target constraint condition with a high probability.

Third Arrangement

An information processing system 10 according to a third arrangement is now described. Moreover, the information processing system 10 according to the third arrangement has substantially the same functions and configuration as the information processing system 10 according to the first arrangement. Thus, in the description of the information processing system 10 according to the third arrangement, components having substantially the same functions and configurations as those in the first arrangement will be denoted by the same reference numerals, and detailed description thereof will be omitted except for the differences.

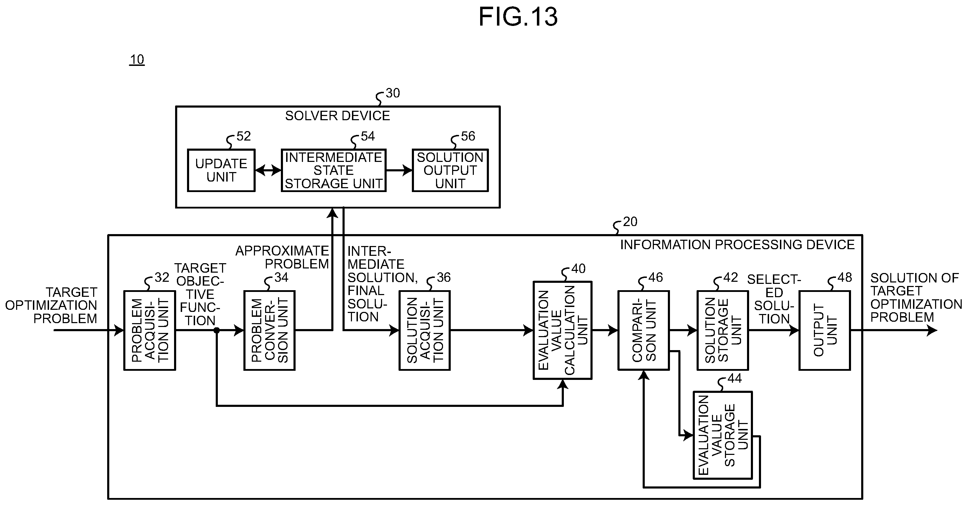

Fig. 13 is a diagram illustrating the functional configuration of an information processing device 20 and the functional configuration of a solver device 30 according to the third arrangement.

In the third arrangement, a target objective function is a function of a different form from the objective function of the optimization problem solvable by the solver device 30. In the present arrangement, the objective function of the optimization problem solvable by the solver device 30 is an R-th order polynomial. In contrast, the target objective function is a polynomial of an order greater than R.

The information processing device 20 according to the third arrangement has a problem acquisition unit 32, a problem conversion unit 34, a solution acquisition unit 36, an evaluation value calculation unit 40, a solution storage unit 42, an evaluation value storage unit 44, a comparison unit 46, and an output unit 48. In other words, the information processing device 20 according to the third arrangement has a configuration that does not include a constraint determination unit 38, in comparison with the first arrangement.

The problem conversion unit 34 converts the acquired target optimization problem into an approximate problem solvable by the solver device 30. In the present arrangement, the problem conversion unit 34 converts the target objective function of the target optimization problem into an approximate function represented by an R-th order polynomial.

The problem conversion unit 34 according to the third arrangement generates an approximate problem by converting the target objective function into an approximate function based on predetermined rule information in the target optimization problem. In such a case, the approximate function can further include one or more auxiliary variables in addition to the multiple decision variables included in the target objective function.

For example, in the case where the target objective function is a cubic polynomial, the problem conversion unit 34 converts the cubic terms into quadratic terms in accordance with Formula (8) or (9).

$$axyz = a \min_{w \in B} w(x + y + z - 2) \ \ \text{if} \ a < 0 \qquad \cdots (8)$$

$$axyz = a\left\{xy + yz + zx - x - y - z + 1 + \min_{w \in B} w(x + y + z - 1)\right\} \ \text{if} \ a > 0 \qquad \cdots (9)$$

In Formulas (8) and (9), x, y, and z are each a decision variable included in the cubic term. a represents a coefficient. w represents an auxiliary variable. w is one of the element in a set B, which represents a set of auxiliary variables.

Further, in the case where the target objective function is a d-th order polynomial (where d is an integer equal to or greater than 3), the problem conversion unit 34 converts the d-th order terms into quadratic terms in accordance with Formula (10) or (11).

$$ax_1 \ldots x_d = \min_{w \in B} aw\left\{\sum_i x_i - (d - 1)\right\} \ \text{if} \ a < 0 \qquad \cdots (10)$$

$$ax_1 \ldots x_d = \min_{w_i \in B} \sum_{i=1}^{n_d} w_i\left(c_{i,d}\left(-\sum_i x_i + 2i\right) - 1\right) + a\left(\sum_{i<j} x_i x_j\right) \ \text{if} \ a > 0 \qquad \cdots (11)$$

$$n_d = \left\lfloor \frac{d - 1}{2} \right\rfloor,$$

$$c_{i,d} = \begin{cases} 1 & \text{if } d \text{ is odd and } i = n_d \\ 2 & \text{otherwise} \end{cases}$$

The problem conversion unit 34 can convert the target objective function into an approximate function that is an R-th order polynomial based on rule information other than Formulas (8) to (11). For example, the problem conversion unit 34 can convert some terms of a polynomial into quadratic terms without using auxiliary variables, in accordance with the method disclosed in Non-Patent Literature 3: H. Ishikawa, "Higher-Order Clique Reduction Without Auxiliary Variables," Proceedings of the IEEE Conference on Computer Vision and Pattern Recognition (CVPR 2014), 2014.

In the present arrangement, the solution acquisition unit 36 provides the acquired intermediate solution or final solution to the evaluation value calculation unit 40.

The evaluation value calculation unit 40 acquires an intermediate solution or a final solution from the solution acquisition unit 36. Each time the evaluation value calculation unit 40 acquires an intermediate solution or a final solution, the evaluation value calculation unit 40 calculates an evaluation value indicating an evaluation of the acquired intermediate solution or final solution as a solution to the target optimization problem.

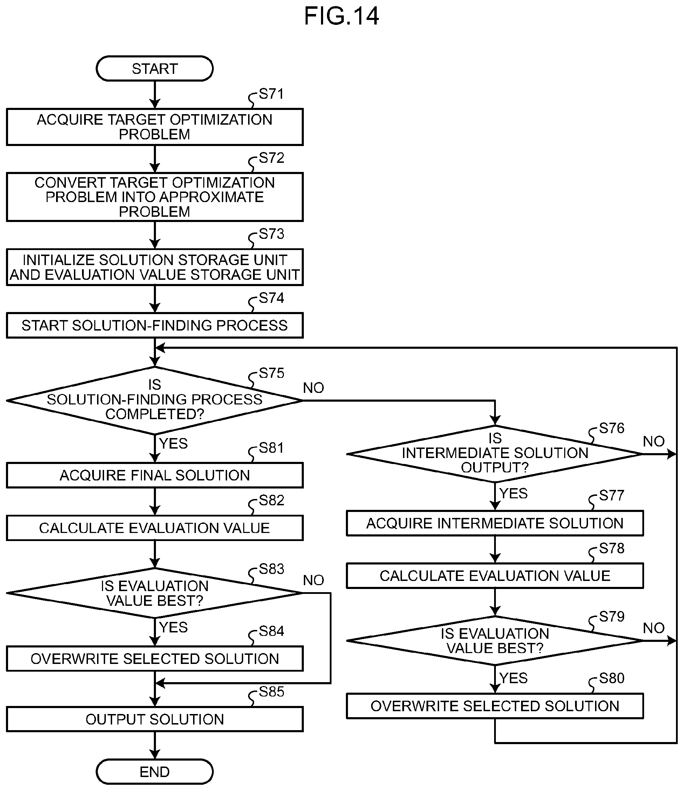

Fig. 14 is a flowchart illustrating the processing procedure of the information processing device 20 of the third arrangement. In the present arrangement, the information processing device 20 executes processing in accordance with the procedure illustrated in Fig. 14.

Initially, in S71, the information processing device 20 acquires a target optimization problem. The target optimization problem acquired by the information processing device 20 according to the third arrangement is a problem of a form that is incapable of being solved by the solver device 30, for example, a problem of minimizing a target objective function that is a polynomial of an order greater than R.

Subsequently, in S72, the information processing device 20 converts the acquired target optimization problem into an approximate problem. In the third arrangement, the information processing device 20 converts the acquired target optimization problem into an approximate problem solvable by the solver device 30. For example, the information processing device 20 generates an approximate problem by converting the target objective function, which is a polynomial of an order greater than R, into an approximate function, which is an R-th order polynomial, based on predetermined rule information.

Subsequently, in S73, the information processing device 20 initializes the solution storage unit 42 and the evaluation value storage unit 44.

Subsequently, in S74, the information processing device 20 provides the approximate problem to the solver device 30 and causes the solver device 30 to start the solution-finding process for calculating a solution to the approximate problem.

Subsequently, in S75, the information processing device 20 determines whether or not the solver device 30 completes the solution-finding process. If the solution-finding process is not completed (No in S75), the information processing device 20 proceeds to S76.

In S76, the information processing device 20 determines whether or not an intermediate solution is output from the solver device 30. If an intermediate solution is not output from the solver device 30 (No in S76), the information processing device 20 returns to S75. If an intermediate solution is output from the solver device 30 (Yes in S76), the information processing device 20 proceeds to S77.

In S77, the information processing device 20 acquires the intermediate solution that is output from the solver device 30.

Subsequently, in S78, the information processing device 20 calculates an evaluation value of the acquired intermediate solution.

In S78, the information processing device 20 calculates an evaluation value of the acquired intermediate solution.

Subsequently, in S79, the information processing device 20 determines whether or not the evaluation value for the acquired intermediate solution is the best intermediate solution among the intermediate solutions that are acquired so far that satisfy the target constraint condition. If the evaluation value of the acquired intermediate solution is not the best (No in S79), the information processing device 20 returns to S75. If the evaluation value of the acquired intermediate solution is the best (Yes in S79), the information processing device 20 proceeds to S80.

In S80, the information processing device 20 writes the acquired intermediate solution into the solution storage unit 42 as a selected solution. In other words, the information processing device 20 overwrites the selected solution stored in the solution storage unit 42 with the acquired intermediate solution. In addition, the information processing device 20 overwrites the evaluation value stored in the evaluation value storage unit 44 with the acquired evaluation value. In the case where the information processing device 20 completes the processing in S80, the information processing device 20 returns to S75.

If the solution-finding process is completed (Yes in S75), the information processing device 20 proceeds to S81.

In S81, the information processing device 20 acquires the final solution that is output from the solver device 30.

In S82, the information processing device 20 calculates an evaluation value of the acquired final solution.

Subsequently, in S83, the information processing device 20 determines whether or not the evaluation value of the acquired final solution is the best among the intermediate solutions and final solutions acquired so far. If the evaluation value of the acquired final solution is not the best (No in S83), the information processing device 20 proceeds to S85. If the evaluation value of the acquired final solution is the best (Yes in S83), the information processing device 20 proceeds to S84.

In S84, the information processing device 20 writes the acquired final solution into the solution storage unit 42 as a selected solution. In other words, the information processing device 20 overwrites the selected solution stored in the solution storage unit 42 with the acquired final solution. In addition, the information processing device 20 overwrites the evaluation value stored in the evaluation value storage unit 44 with the acquired evaluation value. Upon completion of the processing in S84, the information processing device 20 proceeds to S85.

In S85, the information processing device 20 outputs the selected solution stored in the solution storage unit 42 as a solution to the target optimization problem. Upon completion of the processing in S85, the information processing device 20 terminates the processing flow.

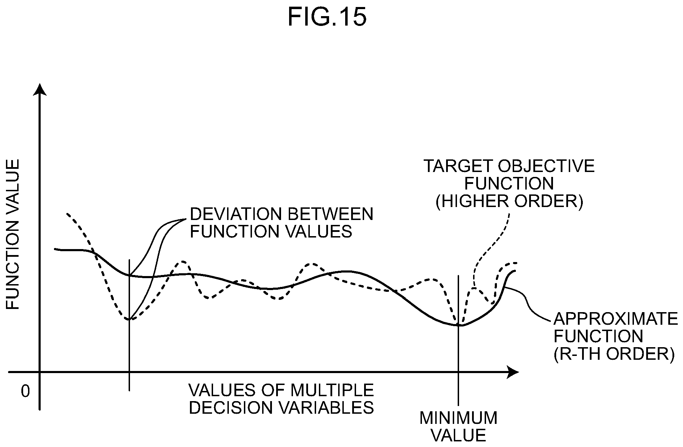

Fig. 15 is a diagram illustrating a function value of a target objective function (higher order) and an approximate function (R-th order).

In the third arrangement, in the case where an approximate function including an auxiliary variable is optimally approximated by the target objective function, it is possible to output a function value that is closely approximate to the target objective function. However, there are cases where the approximate function is not optimally approximated by the target objective function, and in such cases, the approximate function deviates from the target objective function. Additionally, in the third arrangement, the approximate function that does not include an auxiliary variable coincides with the target objective function at the point where the minimum value is attained, but, in some cases, can deviate from the target objective function in other ranges. Furthermore, an approximate function that does not include an auxiliary variable has a higher computational cost for conversion. Accordingly, the approximate function that does not include an auxiliary variable has, in some cases, a large deviation from the target objective function as a trade-off to reduce the computational cost.

Even if the approximate function deviates from the target objective function as described above, the information processing device 20 according to the third arrangement acquires an intermediate solution based on the intermediate state of the solution during the solution-finding process by the solver device 30, at every predetermined number of iterations or every predetermined time interval. Furthermore, the information processing device 20 according to the present arrangement calculates an evaluation value of the intermediate solution every time an intermediate solution is acquired. Then, the information processing device 20 according to the present arrangement outputs the solution with the best evaluation value among the multiple intermediate solutions or final solutions as the solution of the target optimization problem. As a result, the information processing device 20 according to the present arrangement searches the entire value range of the approximate function to increase the probability of outputting an intermediate solution with a good evaluation value, so ultimately enabling the calculation of a highly accurate solution even if the approximate function deviates from the target objective function.

Fourth Arrangement

An information processing system 10 according to a fourth arrangement is now described. Moreover, the information processing system 10 according to the fourth arrangement has substantially the same functions and configuration as the information processing system 10 according to the third arrangement. Thus, in the description of the information processing system 10 according to the fourth arrangement, detailed description of components having substantially the same functions and configuration as those in the third arrangement will be omitted by assigning the same reference numerals and focusing only on the differences.

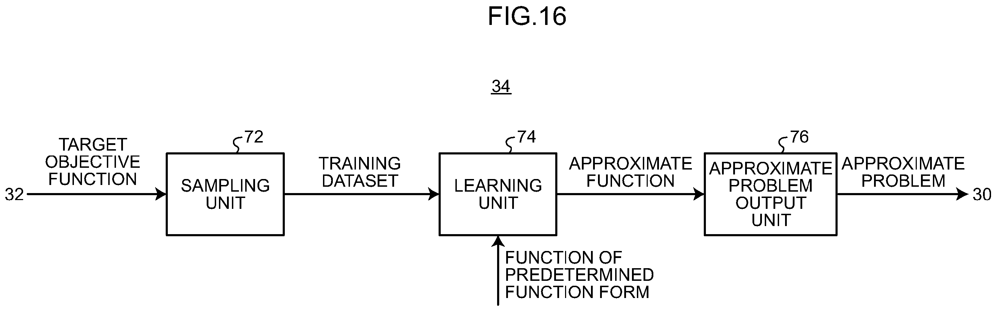

Fig. 16 is a diagram illustrating the functional configuration of a problem conversion unit 34 according to the fourth arrangement.

An information processing device 20 according to the fourth arrangement differs from the third arrangement in the configuration of the problem conversion unit 34. In addition, a target objective function according to the fourth arrangement is not limited to a polynomial and can include a function such as an exponential function or a logarithmic function in some terms.

The problem conversion unit 34 according to the fourth arrangement includes a sampling unit 72, a learning unit 74, and an approximate problem output unit 76.

The sampling unit 72 acquires a target objective function in a target optimization problem. The sampling unit 72 generates a training dataset by executing a sampling process on the target objective function multiple times. The training dataset includes a plurality of training data items (data). Each of the multiple training data items includes values of a plurality of decision variables and a function value of the target objective function. The sampling process is a process of assigning randomly selected values over the entire domain to the plurality of decision variables in the target objective function to acquire the function value of the target objective function.

The learning unit 74 acquires a training dataset from the sampling unit 72. The learning unit 74 uses the training dataset to iteratively train coefficients included in a function of a predetermined function form based on a learning algorithm such as adaptive moment estimation (Adam) optimization, thereby generating an approximate function. In such a case, for example, the learning unit 74 stops learning upon the update amount per learning iteration falling below a predetermined value. The function of the predetermined function form is a function in a form solvable by the solver device 30. The function of the predetermined function form can be a quadratic function or an Ising model.

Further, the learning unit 74 can generate the approximate function by, for example, a discrete black-box optimization method. In such a case, it is preferable that the learning unit 74 prevents overfitting due to a small number of training data included in the training dataset. For example, the learning unit 74 can estimate the approximate function by Bayesian estimation using a horseshoe prior distribution (e.g., Non-Patent Literature 4: Baptista, R. and Poloczek, M., "Bayesian optimization of combinatorial structures," Proceedings of the International Conference on Machine Learning (ICML), PMLR, pp. 462-471, July 2018). Additionally, the learning unit 74 can estimate the approximate function by Bayesian optimization of combinatorial structures (BOCS) that sparsely estimates coefficients by applying a regularization term using L1 regularization or L0 regularization (e.g., Non-Patent Literature 5: Kadowaki, T. and Ambai, M., "Lossy compression of matrices by black box optimisation of mixed integer nonlinear programming," Scientific Reports, Vol. 12(1), Article No. 15482, 2022). In addition, the learning unit 74 can estimate the approximate function by gBOCS that uses a Gaussian prior distribution as an alternative to the horseshoe prior distribution of BOCS (e.g., Non-Patent Literature 5: Kadowaki, T. and Ambai, M., "Lossy compression of matrices by black box optimisation of mixed integer nonlinear programming," Scientific Reports, Vol. 12(1), Article No. 15482, 2022). Furthermore, the learning unit 74 can estimate the approximate function by factorization machine with quantum annealing (FMQA) that performs low-rank approximation of coefficients by a Factorization Machine (e.g., Non-Patent Literature 6: Koki Kitai, Jiang Guo, Shenghong Ju, Shu Tanaka, Koji Tsuda, Junichiro Shiomi, and Ryo Tamura, "Designing metamaterials with quantum annealing and factorization machines," Physical Review Research, Vol. 2, 013319, March 16, 2020, https://doi.org/10.1103/PhysRevRe search.2.013319).

The approximate problem output unit 76 acquires the approximate function generated by the learning unit 74 and generates an approximate problem for minimizing the acquired approximate function. Then, the approximate problem output unit 76 provides the generated approximate problem to the solver device 30.

In the case where the target objective function includes an exponential function or a logarithmic function, the processing of converting the target objective function into an approximate function based on predetermined rule information is more difficult than in the case where the target objective function is a polynomial. Thus, in the case where the target objective function includes an exponential function or a logarithmic function, the approximate function generated based on the rule information can, in some cases, significantly deviate from the target objective function.

In contrast, the information processing device 20 according to the fourth arrangement converts the target objective function into an approximate function through a sampling process and a learning process. Thus, the information processing device 20 according to the fourth arrangement is capable of generating an approximate function that accurately approximates the target objective function, even in cases where the target objective function includes an exponential or logarithmic function. This makes it possible for the information processing device 20 according to the fourth arrangement to calculate a solution with high accuracy.


Fifth Arrangement

An information processing system 10 according to a fifth arrangement is now described. Moreover, the information processing system 10 according to the fifth arrangement has substantially the same functions and configuration as the information processing system 10 according to the third arrangement. Thus, in the description of the information processing system 10 according to the fifth arrangement, components having substantially the same functions and configuration as those in the third arrangement will be assigned the same reference numerals, and detailed description thereof will be omitted except for the differences.

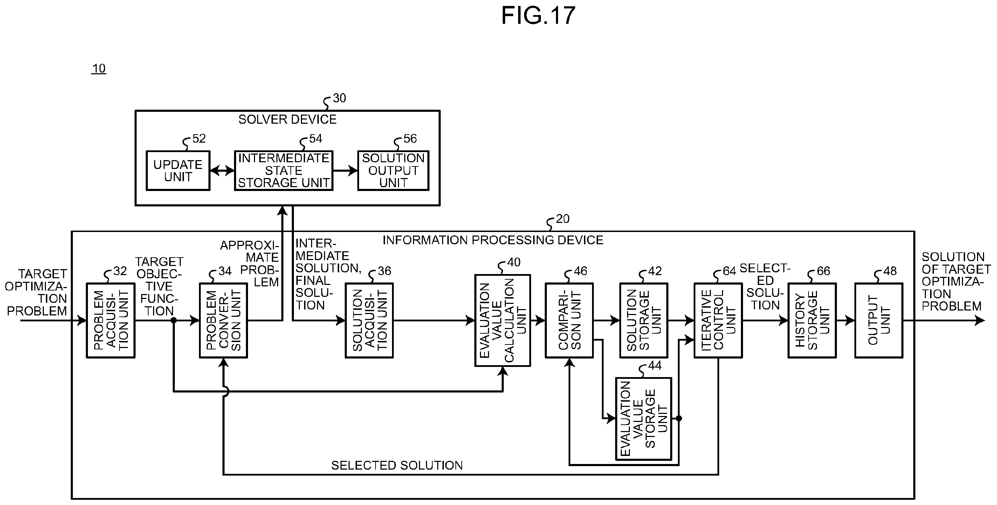

Fig. 17 is a diagram illustrating the functional configuration of an information processing device 20 and the functional configuration of a solver device 30 according to the fifth arrangement.

In the fifth arrangement, the information processing device 20 generates M approximate problems and calculates a selected solution for each of the M approximate problems using the solver device 30. Each of the M approximate problems involves minimizing an approximate function based on a target objective function, but the approximate functions can be mutually different. Then, in the fifth arrangement, the information processing device 20 outputs the best selected solution among the selected solutions calculated for each of the M approximate problems as a solution to the target optimization problem.

Further, the target objective function according to the fifth arrangement is not limited to a polynomial and can include a function such as an exponential function or a logarithmic function in some of the terms.

The information processing device 20 according to the fifth arrangement further includes an iterative control unit 64 and a history storage unit 66.

In the present arrangement, the problem acquisition unit 32 generates M approximate problems. The problem acquisition unit 32 generates each of the M approximate problems by performing the sampling process and learning process.

Further, the problem conversion unit 34 sequentially generates the M approximate problems one by one. In other words, in the case where the problem conversion unit 34 receives the target optimization problem from the problem acquisition unit 32, the problem conversion unit 34 initially generates the first approximate problem among the M approximate problems. Then, the problem conversion unit 34 generates the p-th approximate problem among the M approximate problems after a selected solution to the (p-1)-th approximate problem among the M approximate problems is calculated.

The iterative control unit 64 controls the problem conversion unit 34 to generate the approximate problem by iterating the processing, for example, M times. Upon execution of the solution-finding process for the m-th approximate problem, which corresponds to the m-th iteration, the iterative control unit 64 stores the selected solution, saved in the solution storage unit 42, into the history storage unit 66, as the selected solution for the m-th iteration. Furthermore, the iterative control unit 64 stores the evaluation value stored in the evaluation value storage unit 44, obtained by executing the solution-finding process for the m-th approximate problem, into the history storage unit 66 as the evaluation value of the selected solution for the m-th iteration.

Further, after the (p-1)-th approximate problem, which is the (p-1)-th approximate problem, is generated, the iterative control unit 64 provides the selected solution obtained for the (p-1)-th approximate problem to the problem conversion unit 34 before the p-th approximate problem, which is the p-th approximate problem, is generated.

The history storage unit 66 stores a set of the calculated solution and the evaluation value each time a solution to the approximate problem is calculated. Moreover, the history storage unit 66 can store only the solution with the best evaluation value each time a solution to the approximate problem is iteratively calculated.

The output unit 48 outputs the selected solution with the best evaluation value from among the multiple selected solutions stored in the history storage unit 66 as the solution to the target optimization problem, after the solution-finding process for the approximate problem is executed a predetermined number of times, for example, after the solution to the approximate problem is calculated M times.

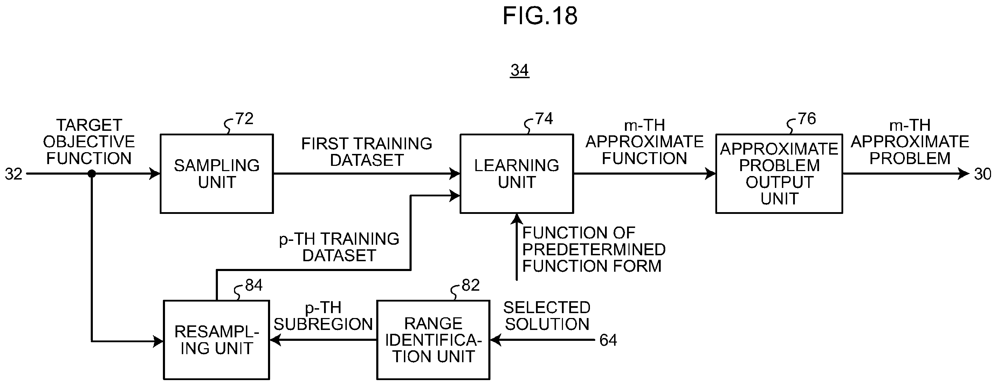

Fig. 18 is a diagram illustrating the configuration of the problem conversion unit 34 according to the fifth arrangement.

The problem conversion unit 34 according to the fifth arrangement includes a sampling unit 72, a learning unit 74, an approximate problem output unit 76, a range identification unit 82, and a resampling unit 84.

In generating a first approximate problem among the M approximate problems, the sampling unit 72 generates a first training dataset (first dataset) by executing the first sampling process multiple times. The first training dataset includes multiple training data items. Each of the multiple training data items includes multiple decision variable values and a function value. The first sampling process is a process of assigning values randomly selected over the entire definition domain to the multiple decision variables in the target objective function to acquire the function value of the target objective function.

In generating the first approximate problem, the learning unit 74 acquires the first training dataset from the sampling unit 72. In generating the first approximate problem, the learning unit 74 generates a first approximate function by training coefficients included in a function of a predetermined function form using the first training dataset. Moreover, the learning unit 74 generates the first approximate function by a learning algorithm similar to that of the fourth arrangement.

In generating the first approximate problem, the approximate problem output unit 76 acquires the first approximate function generated by the learning unit 74 and generates a first approximate problem that minimizes the acquired first approximate function. Then, the approximate problem output unit 76 provides the generated first approximate problem to the solver device 30.

In generating a p-th approximate problem among the M approximate problems, the range identification unit 82 acquires a selected solution, which is selected as having the best evaluation value in the processing for the (p-1)-th approximate problem, from the iterative control unit 64. The range identification unit 82 determines the p-th subregion, which is a part of the domain of the target objective function based on the acquired selected solution. For example, the p-th subregion is a region that includes only the selected solution chosen as having the best evaluation value.

In generating the p-th approximate problem, the resampling unit 84 generates a p-th training dataset by executing the p-th sampling process multiple times. The p-th training dataset includes multiple training data items. Each of the multiple training data items includes multiple decision variable values and a function value. The p-th sampling process is a process of randomly assigning values in the p-th subregion to multiple decision variables in the target objective function to acquire the function value of the target objective function.

In generating the p-th approximate problem, the learning unit 74 acquires the p-th training dataset from the resampling unit 84. In generating the p-th approximate problem, the learning unit 74 generates the p-th approximate function, which is an approximate function, by training the coefficients included in the (p-1)-th approximate function in the (p-1)-th approximate problem using the p-th training dataset. The learning unit 74 generates the p-th approximate function using a learning algorithm similar to that of the fourth arrangement.

In generating the p-th approximate problem, the approximate problem output unit 76 acquires the p-th approximate function generated by the learning unit 74 and generates the p-th approximate problem that minimizes the acquired p-th approximate function. Then, the approximate problem output unit 76 provides the generated p-th approximate problem to the solver device 30.

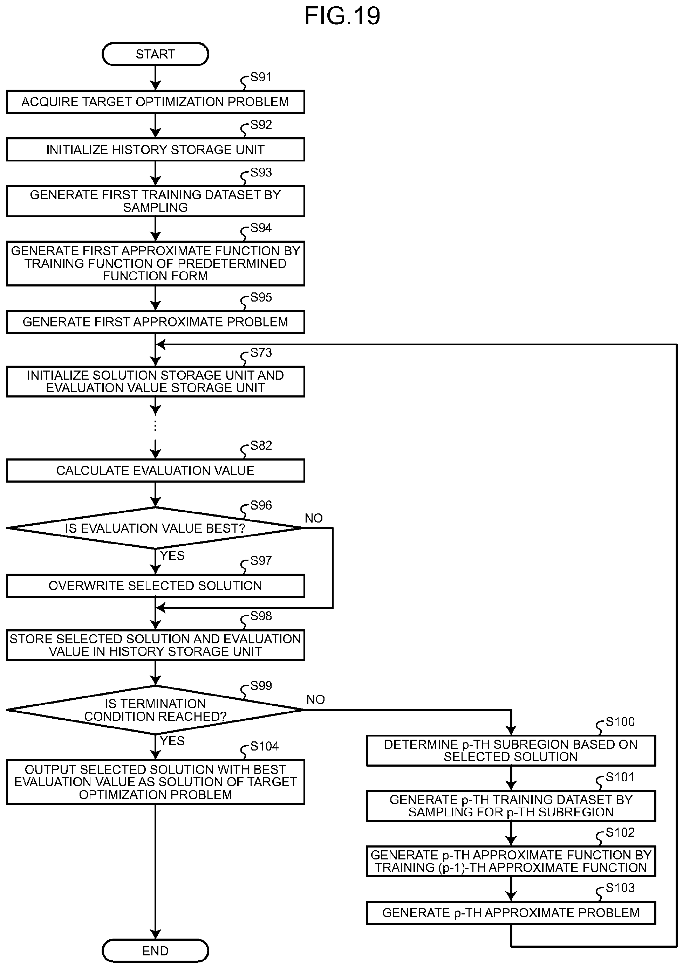

Fig. 19 is a flowchart illustrating the processing procedure of the information processing device 20 according to the fifth arrangement. In the present arrangement, the information processing device 20 executes processing in accordance with the procedure illustrated in Fig. 19. Moreover, in the description of Fig. 19, steps identical to those described with reference to Fig. 14 are assigned the same step numbers.

Initially, in S91, the information processing device 20 acquires a target optimization problem. The target optimization problem acquired by the information processing device 20 according to the fifth arrangement is a problem of a type that is incapable of being solved by the solver device 30. For example, the target optimization problem acquired by the information processing device 20 according to the fifth arrangement is, for example, a problem of minimizing a target objective function that is a polynomial of order higher than, for example, the R-th order, or a problem of minimizing a target objective function that includes a function such as an exponential function or a logarithmic function in some of its terms.

Subsequently, in S92, the information processing device 20 initializes the history storage unit 66.

Subsequently, in S93, the information processing device 20 generates a first training dataset. For example, the information processing device 20 generates the first training dataset by executing a first sampling process in which values randomly selected over the entire domain are assigned to a plurality of decision variables in a target objective function to acquire the function value of the target objective function.

Subsequently, in S94, the information processing device 20 generates a first approximate function by training coefficients included in a function of a predetermined function form using the first training dataset.

Subsequently, in S95, the information processing device 20 generates a first approximate problem that minimizes the first approximate function.

Subsequently, the information processing device 20 executes the processing from S73 to S82. The processing from S73 to S82 is the same as that of the third arrangement illustrated in Fig. 14.

Following S82, the information processing device 20 proceeds to S96.

In S96, the information processing device 20 determines whether or not the evaluation value for the acquired final solution is the best among the intermediate solutions and final solutions acquired so far. If the evaluation value of the acquired final solution is not the best (No in S96), the information processing device 20 proceeds to S98. If the evaluation value of the acquired final solution is the best (Yes in S96), the information processing device 20 proceeds to S97.

In S97, the information processing device 20 writes the acquired final solution into the solution storage unit 42 as a selected solution. In other words, the information processing device 20 overwrites the selected solution stored in the solution storage unit 42 with the acquired final solution. In addition, the information processing device 20 overwrites the evaluation value stored in the evaluation value storage unit 44 with the acquired evaluation value. Following S97, the information processing device 20 proceeds to S98.

In S98, the information processing device 20 stores the selected solution stored in the solution storage unit 42 and the evaluation value stored in the evaluation value storage unit 44 as a set in the history storage unit 66.

Subsequently, in S99, the information processing device 20 determines whether or not the iteration termination condition is reached. For example, the information processing device 20 can determine that the termination condition is reached upon execution of the processing from S73 to S98 for M iterations. In addition, the information processing device 20 can determine that the termination condition is reached in the case where a predetermined time has elapsed since the start of the processing.

If the termination condition is not reached (No in S99), the information processing device 20 proceeds to S100.

In S100, if the number of times the approximate problem is generated is (p-1) times, the information processing device 20 determines the p-th subregion, which is a part of the domain of the target objective function, based on the selected solution stored in the solution storage unit 42.

Subsequently, in S101, if the number of times the approximate problem is generated is (p-1) times, the information processing device 20 generates a p-th training dataset. For example, the information processing device 20 generates the p-th training dataset by randomly assigning values in the p-th subregion to multiple decision variables in the target objective function to acquire the function value of the target objective function.

Subsequently, in S102, if the number of times the approximate problem is generated is (p-1), i.e., in the p-th iteration, the information processing device 20 generates the p-th approximate function, which is an approximate function, by additionally training the coefficients included in the (p-1)-th approximate function in the (p-1)-th approximate problem using the p-th training dataset.

Subsequently, in S103, if the number of times the approximate problem is generated is (p-1) times, the information processing device 20 generates a p-th approximate problem that minimizes the p-th approximate function.

Upon completion of the processing in S103, the information processing device 20 returns to S73 and iterates the processing of S73 onward for the p-th approximate problem.

Then, if the termination condition is reached (Yes in S99), the information processing device 20 proceeds to S104.

In S104, the information processing device 20 outputs the selected solution with the best evaluation value among the selected solutions stored in the history storage unit 66 as a solution to the target optimization problem. Upon completion of the processing in S104, the information processing device 20 terminates the processing flow.

For example, in the method of obtaining an approximate function by machine learning described above, in the case of performing uniform random sampling, a function that uniformly approximates the entire domain is obtained. However, in the case of obtaining a solution that minimizes or maximizes an objective function, the approximate function is required to accurately approximate the region close to the solution, whereas it is not necessary to accurately approximate the region that is unlikely to contain a solution. The information processing device 20 according to the present arrangement performs random sampling over the entire domain of the target objective function in the first iteration, but in the second iteration and subsequent iterations, the region to be sampled is determined based on the selected solution obtained in the immediately preceding iteration. Thus, the information processing device 20 according to the present arrangement accurately approximates the region near the solution in the approximate function to the target objective function as the optimization is iterated. This enables the information processing device 20 according to the present arrangement to calculate a solution with high accuracy.

Sixth Arrangement

An information processing system 10 according to a sixth arrangement is now described. Moreover, the information processing system 10 according to the sixth arrangement has substantially the same functions and configuration as the information processing system 10 according to the first arrangement. Thus, in the description of the information processing system 10 according to the sixth arrangement, components having substantially the same functions and configurations as those in the first arrangement are denoted by the same reference numerals, and detailed description thereof will be omitted except for the differences.

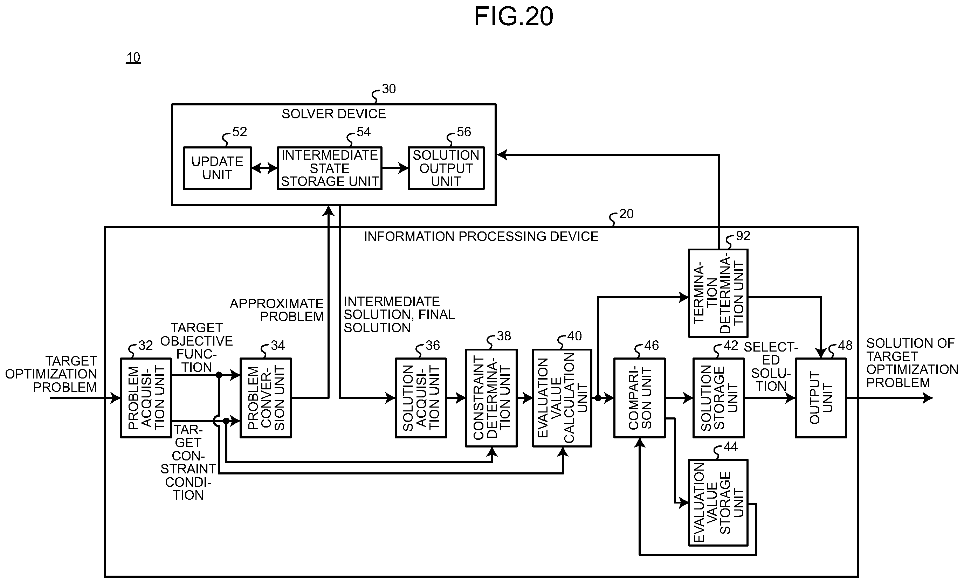

Fig. 20 is a diagram illustrating the functional configuration of an information processing device 20 and a solver device 30 according to the sixth arrangement.

In the sixth arrangement, the information processing device 20 further includes a termination determination unit 92.

The termination determination unit 92 acquires a set including an intermediate solution and an evaluation value from the evaluation value calculation unit 40. Each time the termination determination unit 92 acquires a set including an intermediate solution and an evaluation value from the evaluation value calculation unit 40, the termination determination unit 92 determines whether or not the acquired evaluation value is better than a preset evaluation reference value. If the acquired evaluation value is better than the evaluation reference value, the termination determination unit 92 issues an output instruction to the output unit 48 to output the acquired intermediate solution. Furthermore, if the acquired evaluation value is better than the evaluation reference value, the termination determination unit 92 can stop the solution-finding process by the solver device 30.

In the case of receiving an output instruction from the termination determination unit 92, the output unit 48 acquires an intermediate solution from the termination determination unit 92 and outputs the acquired intermediate solution as a solution to the target optimization problem.

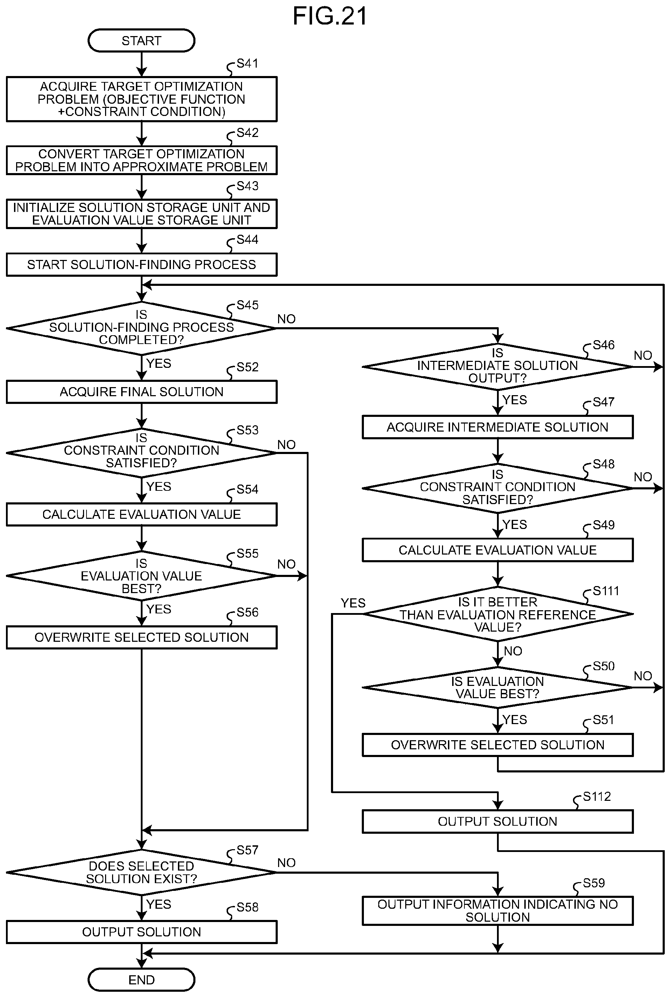

Fig. 21 is a flowchart illustrating the processing procedure of the information processing device 20 of the sixth arrangement. In the present arrangement, the information processing device 20 executes processing in accordance with the procedure illustrated in Fig. 21. Moreover, in the description of Fig. 12, the same processing as that illustrated in Fig. 8 is assigned the same step number.

Following S49, the information processing device 20 proceeds to S111. In S111, the information processing device 20 determines whether or not the evaluation value calculated in S49 is better than a preset evaluation reference value. If the calculated evaluation value is not better than the evaluation reference value (No in S111), the information processing device 20 proceeds to S50. If the calculated evaluation value is better than the evaluation reference value (Yes in S111), the information processing device 20 proceeds to S112.

In S112, the information processing device 20 outputs the intermediate solution acquired in S47 as a solution to the target optimization problem. Upon completion of the processing in S112, the information processing device 20 terminates the processing flow.

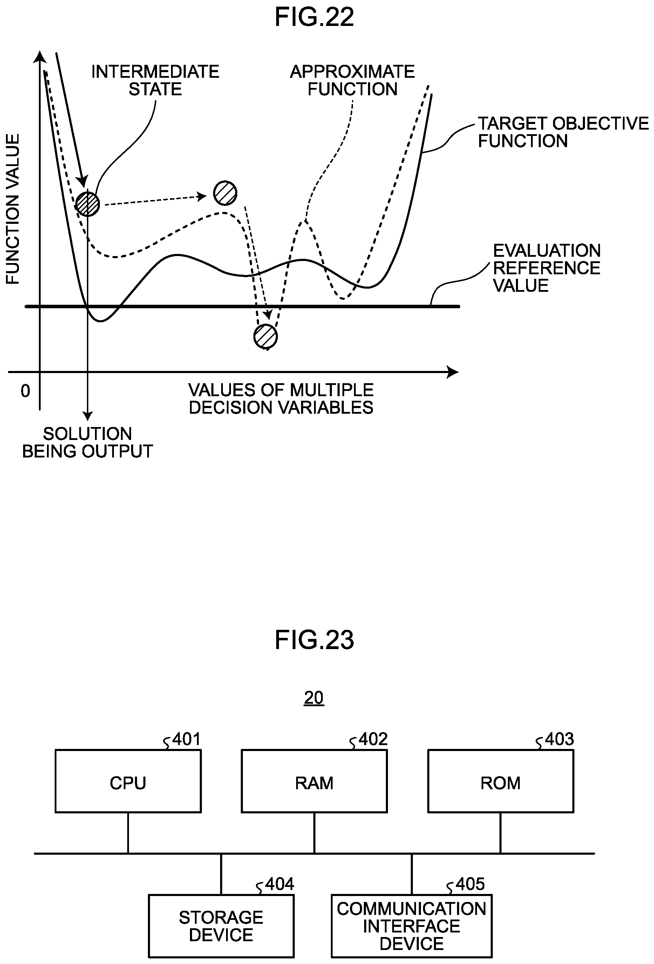

Fig. 22 is a diagram illustrating an example of a target objective function, an approximate function, and an evaluation reference value.

Among applications using optimization problems, there are applications where maintaining a certain quality of solution is sufficient. In addition, among applications using optimization problems, there are applications where an acceptable response time is determined, and the quality of the solution to the optimization problem is not prioritized. For example, real-time applications are required to respond within a certain time, and if a time referred to as a deadline passes, the effect or value of the calculation, in some cases, can be lost or significantly reduced. The optimization solver used in such applications is required to output a solution with minimal latency.

The information processing device 20 according to the sixth arrangement sequentially acquires intermediate solutions during the solution-finding process to an approximate problem by the solver device 30, and calculates an evaluation value of the acquired intermediate solution each time the intermediate solution is acquired. Then, in the case where the acquired intermediate solution satisfies the constraint condition and the evaluation value of the intermediate solution is better than a preset evaluation reference value, the information processing device 20 according to the sixth arrangement outputs the acquired intermediate solution as a solution to the target optimization problem.

Thus, according to the information processing device 20 according to the sixth arrangement, it is possible to output a solution that is better than the evaluation reference value more quickly.

Moreover, the termination determination unit 92 can be applied to the information processing device 20 according to each of the second to fifth arrangements. In other words, the information processing device 20 according to each of the second to fifth arrangements can be provided with the termination determination unit 92.

Hardware Configuration

Fig. 23 is a diagram illustrating an exemplary hardware configuration of a computer. The information processing device 20 is implemented, for example, by a computer having a hardware configuration as illustrated in Fig. 23. The information processing device 20 includes a central processing unit (CPU) 401, a random-access memory (RAM) 402, a read-only memory (ROM) 403, a storage device 404, and a communication interface device 405. Then, these components are interconnected via a bus.

The CPU 401 is one or more processors that execute arithmetic and control processing in accordance with a program. The CPU 401 executes various types of processing in cooperation with a program stored in the ROM 403, the storage device 404, or the like, using a predetermined area of the RAM 402 as a working area.

The RAM 402 is a memory such as a synchronous dynamic random access memory (SDRAM). The RAM 402 functions as a working area for the CPU 401. The ROM 403 is a memory in which programs and various types of information are stored in a non-rewritable manner.

The storage device 404 is a device that writes and reads data to and from a semiconductor storage medium such as a flash memory, or a magnetically or optically recordable storage medium. The storage device 404 writes and reads data to and from the storage medium under the control of the CPU 401. The communication interface device 405 communicates with an external device via a network under the control of the CPU 401.

A program executed by a computer causes the computer to function as the information processing device 20. This program is loaded onto the RAM 402 and executed by the CPU 401 (processor).

Further, the program executed by the computer is provided as a file in an installable format or an executable format, recorded on a computer-readable recording medium such as a CD-ROM, a flexible disk, a CD-R, or a digital versatile disk (DVD).

Alternatively, the program can be configured to be provided by storing it on a computer connected to a network such as the Internet and downloading it via the network. In addition, the program can be configured to be provided or distributed via a network such as the Internet. Additionally, the program to be executed in the information processing device 20 can be configured to be provided by being pre-installed in the ROM 403 or the like.

The program for causing the computer to function as the information processing device 20 includes, for example, a problem acquisition module, a problem conversion module, a solution acquisition module, a constraint determination module, an evaluation value calculation module, a comparison module, and an output module. Furthermore, the program can include an iterative control module and a termination determination module. This program, when executed by the CPU 401, causes each module to be loaded into the RAM 402, thereby enabling the CPU 401 to function as a processing unit that includes the problem acquisition unit 32, the problem conversion unit 34, the solution acquisition unit 36, the constraint determination unit 38, the evaluation value calculation unit 40, the comparison unit 46, and the output unit 48. Furthermore, this program can cause the CPU 401 to function as the iterative control unit 64 and the termination determination unit 92. In the case where the CPU 401 is a multiple processor, these units can be shared among the multiple processors. Moreover, some or all of these configurations can be configured in hardware. In addition, this program causes the RAM 402 or the storage device 404 to function as the solution storage unit 42 and the evaluation value storage unit 44. Furthermore, this program can cause the RAM 402 or the storage device 404 to function as the coefficient storage unit 62 and the history storage unit 66.

Further, the solver device 30 can be implemented using a computer having a hardware configuration such as that illustrated in Fig. 23. In such a case, the program for causing the computer to function as the solver device 30 includes, for example, an update module and a solution output module. This program, when executed by the CPU 401, causes each module to be loaded into the RAM 402 and enables the CPU 401 to function as the update unit 52 and the solution output unit 56. In the case where the CPU 401 is a multiple processor, these units can be shared among the multiple processors. Additionally, some or all of these configurations can be configured in hardware. Furthermore, this program causes the RAM 402 or the storage device 404 to function as the intermediate state storage unit 54.

Further, each of the processing unit of the information processing device 20 and the solver device 30 can be implemented using one or more reconfigurable semiconductor devices, such as a field-programmable gate array (FPGA). In addition, each of the information processing device 20 and the solver device 30 can be implemented using one or more CPUs, microprocessors, graphics processing units (GPUs), application specific integrated circuits (ASICs), or electronic circuits including these circuits or the like.

Furthermore, in the case where each of the processing unit of the information processing device 20 and the solver device 30 is implemented using a reconfigurable semiconductor device such as an FPGA, the circuit information (configuration data) to be written into the reconfigurable semiconductor device to operate the reconfigurable semiconductor device as each of the processing unit of the information processing device 20 and the solver device 30 can be provided by being stored on a computer connected to a network such as the Internet and provided by downloading it via the network. In addition, the circuit information (configuration data) to be written to the reconfigurable semiconductor device to operate the reconfigurable semiconductor device as each of the processing unit of the information processing device 20 and the solver device 30 can be provided by being recorded on a computer-readable recording medium.

Further, in the case where each of the processing unit of the information processing device 20 and the solver device 30 is implemented using a semiconductor device such as an ASIC, the circuit information representing the configuration of the circuit described in a hardware description language used for the design and manufacture of each of the processing unit of the information processing device 20 and the solver device 30 can be provided by being stored on a computer connected to a network such as the Internet and provided by downloading it via the network. Additionally, the circuit information representing the configuration of the circuit described in a hardware description language used for the design and manufacture of each of the information processing device 20 and the solver device 30 can be provided by being recorded on a computer-readable recording medium.

While certain arrangements have been described, these arrangements have been presented by way of example only, and are not intended to limit the scope of the claims. Indeed, the devices, methods, and medium described herein may be embodied in a variety of other forms; furthermore various omissions, substitutions and changes in the form of the devices, methods, and medium described herein may be made.

Supplementary Notes

Moreover, the present technique can also be configured as follows:

(1) An information processing device configured to output a solution in a target optimization problem for minimizing or maximizing a target objective function, the information processing device comprising:
a processing unit configured to:

provide a solver device with an approximate problem for minimizing or maximizing an approximate function based on the target objective function, the solver device being configured to execute a solution-finding process while iteratively updating intermediate states of a solution;

acquire, from the solver device, a plurality of intermediate solutions and a final solution, the intermediate solutions being based on the intermediate states of the solution calculated during execution of the solution-finding process for the approximate problem, the final solution representing a solution calculated after the plurality of intermediate solutions in the solution-finding process for the approximate problem;

calculate, for each of the plurality of intermediate solutions and the final solution, an evaluation value indicating an evaluation as a solution to the target optimization problem; and

output, as the solution to the target optimization problem, any selected solution selected from among the plurality of intermediate solutions and the final solution based on the evaluation value.

(2) The information processing device according to (1), wherein

the target optimization problem is an optimization problem for minimizing or maximizing the target objective function under a target constraint condition as a constraint condition, and
the processing unit is configured to:

acquire the target optimization problem; and

output, as the solution to the target optimization problem, a solution for which the evaluation value is best among the plurality of intermediate solutions and the final solution that satisfy the target constraint condition.

(3) The information processing device according to (1) or (2), wherein

the target optimization problem is an optimization problem for minimizing or maximizing the target objective function under a constraint according to a target constraint condition,
the approximate function is a function obtained by adding the target objective function, and a term obtained by multiplying a penalty function based on the target constraint condition by a coupling coefficient,
in a case where the target optimization problem is a problem for minimizing the target objective function, the penalty function is larger in a case where the target constraint condition is not satisfied than in a case where the target constraint condition is satisfied, and
in a case where the target optimization problem is a problem for maximizing the target objective function, the penalty function is smaller in the case where the target constraint condition is not satisfied than in the case where the target constraint condition is satisfied.

(4) The information processing device according to (3), wherein

the processing unit is configured to generate M approximate problems, each being the approximate problem, M being an integer equal to or greater than 2
an m-th approximate problem among the M approximate problems is an optimization problem for maximizing or minimizing an m-th approximate function obtained by adding the target objective function, and a term obtained by multiplying the penalty function by an m-th coupling coefficient as the coupling coefficient, m being an integer from 1 to M, inclusive, and
the processing unit is configured to output, as the solution to the target optimization problem, a best solution among the selected solutions each selected for corresponding one of the M approximate problems.

(5) The information processing device according to (4), wherein

a p-th approximate problem among the M approximate problems is an optimization problem for maximizing or minimizing a p-th approximate function obtained by adding the target objective function, and a term obtained by multiplying the penalty function by a p-th coupling coefficient as the coupling coefficient, p being an integer from 2 to M, inclusive, and
the processing unit is configured to:

in a case where the selected solution that satisfies the target constraint condition is not obtained for a (p-1)-th approximate problem among the M approximate problems, set the p-th coupling coefficient to be larger than a (p-1)-th coupling coefficient as the coupling coefficient used in a (p-1)-th approximate problem; and
in a case where the selected solution that satisfies the target constraint condition is obtained for the (p-1)-th approximate problem, set the p-th coupling coefficient to be smaller than the (p-1)-th coupling coefficient.

(6) The information processing device according to (5), wherein
the processing unit is configured to set the p-th coupling coefficient to be smaller than the (p-1)-th coupling coefficient, on condition that the evaluation value of the selected solution obtained for the (p-1)-th approximate problem is better than a predetermined value.
(7) The information processing device according to (1) or (2), wherein

the target objective function is a function in a form different than an objective function of an optimization problem solvable by the solver device, and
the approximate function is a function identical in form to the objective function of an optimization problem solvable by the solver device.

(8) The information processing device according to (7), wherein

the objective function of the optimization problem solvable by the solver device is R-th order polynomial,
the target objective function is a polynomial of an order higher than R, and
the processing unit is configured to convert the target optimization problem into the approximate problem by converting the target objective function into the approximate function based on predetermined rule information.

(9) The information processing device according to (7), wherein
the processing unit is configured to:

generate a dataset by executing, a plurality of times, a sampling process of assigning values to a plurality of decision variables in the target objective function to acquire a function value of the target objective function, the dataset including a plurality of data items, each data item including values of the plurality of decision variables and the function value;

generate the approximate function by training a coefficient included in a function of a predetermined function form identical to that of the objective function of an optimization problem solvable by the solver device, using the dataset; and
generate the approximate problem based on the approximate function.

(10) The information processing device according to (7), wherein

the processing unit is configured to generate M approximate problems, each being the approximate problem based on the target objective function,
in generating a first approximate problem among the M approximate problems, the processing unit is configured to:

generate a first dataset by executing, a plurality of times, a first sampling process of assigning values to a plurality of decision variables in the target objective function to acquire a function value of the target objective function,
the first dataset including a plurality of data items, each data item including values of the plurality of decision variables and the function value;
generate a first approximate function as the approximate function by training a coefficient included in a surrogate function identical in form to the objective function solvable by the solver device using the first dataset; and

generate the first approximate problem based on the first approximate function,
in generating a p-th approximate problem among the M approximate problems, p being an integer from 2 to M, inclusive, the processing unit is configured to:

determine a p-th subregion which is a portion of a domain of the target objective function, based on the selected solution selected for a (p-1)-th approximate problem among the M approximate problems;
generate a p-th dataset by executing a p-th sampling process one or more times, values in the p-th subregion being assigned to a plurality of decision variables in the target objective function to acquire a function value of the target objective function in the p-th sampling process,
the p-th dataset including a plurality of data items, each data item including values of the plurality of decision variables and the function value;
generate a p-th approximate function as the approximate function by training a coefficient included in a (p-1)-th approximate function in the (p-1)-th approximate problem, using the p-th dataset; and
generate the p-th approximate problem based on the p-th approximate function.

(11) The information processing device according to any one of (1) to (10), wherein
the processing unit is configured to:

sequentially acquire the intermediate solutions during the solution-finding process for the solution of the approximate problem by the solver device;
calculate, each time the intermediate solution is acquired, an evaluation value of the acquired intermediate solution; and
output, in a case where the evaluation value of the intermediate solution is better than a predetermined evaluation reference value, the intermediate solution with the evaluation value better than the predetermined evaluation reference value, as the solution to the target optimization problem.

(12) The information processing device according to any one of (1) to (11), wherein
the solver device finds a solution for the approximate problem using a simulated bifurcation algorithm.
(13) The information processing device according to any one of (1) to (12), further comprising
the solver device.
(14) An information processing method of calculating a solution to a target optimization problem for minimizing or maximizing a target objective function by an information processing device, the method comprising:

providing a solver device with an approximate problem for minimizing or maximizing an approximate function based on the target objective function, the solver device being configured to execute a solution-finding process for the approximate problem while iteratively updating an intermediate state of a solution;
acquiring, from the solver device, a plurality of intermediate solutions and a final solution, the intermediate solutions being based on the intermediate state of the solution calculated during execution of the solution-finding process for the approximate problem, the final solution representing a solution calculated after the plurality of intermediate solutions in the solution-finding process for the approximate problem;

calculating, for each of the plurality of intermediate solutions and the final solution, an evaluation value indicating an evaluation as a solution to the target optimization problem; and

outputting, as the solution to the target optimization problem, any selected solution selected from among the plurality of intermediate solutions and the final solution based on the evaluation value.

(15) A program for causing a computer to function as an information processing device for calculating a solution to a target optimization problem for minimizing or maximizing a target objective function,

the program causing the computer to function as:

a processing unit configured to:

provide a solver device with an approximate problem for minimizing or maximizing an approximate function based on the target objective function, the solver device being configured to execute a solution-finding process for the approximate problem while iteratively updating an intermediate state of a solution;

acquire, from the solver device, a plurality of intermediate solutions and a final solution, the intermediate solutions being based on the intermediate state of the solution calculated during execution of the solution-finding process for the approximate problem, the final solution representing a solution calculated after the plurality of intermediate solutions in the solution-finding process for the approximate problem;

calculate, for each of the plurality of intermediate solutions and the final solution, an evaluation value indicating an evaluation as a solution to the target optimization problem; and

output, as a solution to the target optimization problem, any selected solution selected from among the plurality of intermediate solutions and the final solution based on the evaluation value.

(16) A circuit information described in a hardware description language representing a configuration of a circuit,

the circuit information causing the circuit to function as an information processing device configured to output a solution in a target optimization problem for minimizing or maximizing a target objective function,

wherein

the information processing device includes

a processing unit configured to:

provide a solver device with an approximate problem for minimizing or maximizing an approximate function based on the target objective function, the solver device being configured to execute a solution-finding process for the approximate problem while iteratively updating an intermediate state of a solution;

acquire, from the solver device, a plurality of intermediate solutions and a final solution, the intermediate solutions being based on the intermediate state of the solution calculated during execution of the solution-finding process for the approximate problem, the final solution representing a solution calculated after the plurality of intermediate solutions in the solution-finding process for the approximate problem;

calculate, for each of the plurality of intermediate solutions and the final solution, an evaluation value indicating an evaluation as a solution to the target optimization problem; and

output, as a solution to the target optimization problem, any selected solution selected from among the plurality of intermediate solutions and the final solution based on the evaluation value.

(17) A circuit information to be written into a reconfigurable semiconductor device to operate the reconfigurable semiconductor device,

the circuit information causing the reconfigurable semiconductor device to function as an information processing device configured to output a solution in a target optimization problem for minimizing or maximizing a target objective function, wherein

the information processing device includes

a processing unit configured to:

provide a solver device with an approximate problem for minimizing or maximizing an approximate function based on the target objective function, the solver device being configured to execute a solution-finding process for the approximate problem while iteratively updating an intermediate state of a solution;

acquire, from the solver device, a plurality of intermediate solutions and a final solution, the intermediate solutions being based on the intermediate state of the solution calculated during execution of the solution-finding process for the approximate problem, the final solution representing a solution calculated after the plurality of intermediate solutions in the solution-finding process for the approximate problem;

calculate, for each of the plurality of intermediate solutions and the final solution, an evaluation value indicating an evaluation as a solution to the target optimization problem; and

output, as a solution to the target optimization problem, any selected solution selected from among the plurality of intermediate solutions and the final solution based on the evaluation value.

**Claims**

1. An information processing device (20) configured to output a solution in a target optimization problem for minimizing or maximizing a target objective function, the information processing device (20) comprising:

a processing unit (401) configured to:

provide a solver device with an approximate problem for minimizing or maximizing an approximate function based on the target objective function, the solver device being configured to execute a solution-finding process while iteratively updating intermediate states of a solution;

acquire, from the solver device, a plurality of intermediate solutions and a final solution, the intermediate solutions being based on the intermediate states of the solution calculated during execution of the solution-finding process for the approximate problem, the final solution representing a solution calculated after the plurality of intermediate solutions in the solution-finding process for the approximate problem;

calculate, for each of the plurality of intermediate solutions and the final solution, an evaluation value indicating an evaluation as a solution to the target optimization problem; and

output, as the solution to the target optimization problem, any selected solution selected from among the plurality of intermediate solutions and the final solution based on the evaluation value.

2. The information processing device (20) according to claim 1, wherein

the target optimization problem is an optimization problem for minimizing or maximizing the target objective function under a target constraint condition as a constraint condition, and

the processing unit (401) is configured to:

acquire the target optimization problem; and

output, as the solution to the target optimization problem, a solution for which the evaluation value is best among the plurality of intermediate solutions and the final solution that satisfy the target constraint condition.

3. The information processing device (20) according to claim 1 or 2, wherein

the target optimization problem is an optimization problem for minimizing or maximizing the target objective function under a constraint according to a target constraint condition,

the approximate function is a function obtained by adding the target objective function, and a term obtained by multiplying a penalty function based on the target constraint condition by a coupling coefficient,

in a case where the target optimization problem is a problem for minimizing the target objective function, the penalty function is larger in a case where the target constraint condition is not satisfied than in a case where the target constraint condition is satisfied, and

in a case where the target optimization problem is a problem for maximizing the target objective function, the penalty function is smaller in the case where the target constraint condition is not satisfied than in the case where the target constraint condition is satisfied.

4. The information processing device (20) according to claim 3, wherein

the processing unit (401) is configured to generate M approximate problems, each being the approximate problem, M being an integer equal to or greater than 2

an m-th approximate problem among the M approximate problems is an optimization problem for maximizing or minimizing an m-th approximate function obtained by adding the target objective function, and a term obtained by multiplying the penalty function by an m-th coupling coefficient as the coupling coefficient, m being an integer from 1 to M, inclusive, and

the processing unit (401) is configured to output, as the solution to the target optimization problem, a best solution among the selected solutions each selected for corresponding one of the M approximate problems.

5. The information processing device (20) according to claim 4, wherein

a p-th approximate problem among the M approximate problems is an optimization problem for maximizing or minimizing a p-th approximate function obtained by adding the target objective function, and a term obtained by multiplying the penalty function by a p-th coupling coefficient as the coupling coefficient, p being an integer from 2 to M, inclusive, and
the processing unit (401) is configured to:

in a case where the selected solution that satisfies the target constraint condition is not obtained for a (p-1)-th approximate problem among the M approximate problems, set the p-th coupling coefficient to be larger than a (p-1)-th coupling coefficient as the coupling coefficient used in a (p-1)-th approximate problem; and
in a case where the selected solution that satisfies the target constraint condition is obtained for the (p-1)-th approximate problem, set the p-th coupling coefficient to be smaller than the (p-1)-th coupling coefficient.

6. The information processing device (20) according to claim 5, wherein
the processing unit (401) is configured to set the p-th coupling coefficient to be smaller than the (p-1)-th coupling coefficient, on condition that the evaluation value of the selected solution obtained for the (p-1)-th approximate problem is better than a predetermined value.

7. The information processing device (20) according to claim 1 or 2, wherein

the target objective function is a function in a form different than an objective function of an optimization problem solvable by the solver device, and
the approximate function is a function identical in form to the objective function of an optimization problem solvable by the solver device.

8. The information processing device (20) according to claim 7, wherein

the objective function of the optimization problem solvable by the solver device is R-th order polynomial,
the target objective function is a polynomial of an order higher than R, and
the processing unit (401) is configured to convert the target optimization problem into the approximate problem by converting the target objective function into the approximate function based on predetermined rule information.

9. The information processing device (20) according to claim 7, wherein
the processing unit (401) is configured to:

generate a dataset by executing, a plurality of times, a sampling process of assigning values to a plurality of decision variables in the target objective function to acquire a function value of the target objective function, the dataset including a plurality of data items, each data item including values of the plurality of decision variables and the function value;
generate the approximate function by training a coefficient included in a function of a predetermined function form identical to that of the objective function of an optimization problem solvable by the solver device, using the dataset; and
generate the approximate problem based on the approximate function.

10. The information processing device (20) according to claim 7, wherein

the processing unit (401) is configured to generate M approximate problems, each being the approximate problem based on the target objective function,
in generating a first approximate problem among the M approximate problems, the processing unit (401) is configured to:

generate a first dataset by executing, a plurality of times, a first sampling process of assigning values to a plurality of decision variables in the target objective function to acquire a function value of the target objective function,

the first dataset including a plurality of data items, each data item including values of the plurality of decision variables and the function value;
generate a first approximate function as the approximate function by training a coefficient included in a surrogate function identical in form to the objective function solvable by the solver device using the first dataset; and

generate the first approximate problem based on the first approximate function,
in generating a p-th approximate problem among the M approximate problems, p being an integer from 2 to M, inclusive, the processing unit (401) is configured to:

determine a p-th subregion which is a portion of a domain of the target objective function, based on the selected solution selected for a (p-1)-th approximate problem among the M approximate problems;
generate a p-th dataset by executing a p-th sampling process one or more times, values in the p-th subregion being assigned to a plurality of decision variables in the target objective function to acquire a function value of the target objective function in the p-th sampling process,
the p-th dataset including a plurality of data items, each data item including values of the plurality of decision variables and the function value;
generate a p-th approximate function as the approximate function by training a coefficient included in a (p-1)-th approximate function in the (p-1)-th approximate problem, using the p-th dataset; and
generate the p-th approximate problem based on the p-th approximate function.

11. The information processing device (20) according to claim 1, wherein
the processing unit (401) is configured to:

sequentially acquire the intermediate solutions during the solution-finding process for the solution of the approximate problem by the solver device;
calculate, each time the intermediate solution is acquired, an evaluation value of the acquired intermediate solution; and
output, in a case where the evaluation value of the intermediate solution is better than a predetermined evaluation reference value, the intermediate solution with the evaluation value better than the predetermined evaluation reference value, as the solution to the target optimization problem.

12. The information processing device (20) according to claim 1, wherein
the solver device finds a solution for the approximate problem using a simulated bifurcation algorithm.

13. The information processing device (20) according to claim 1, further comprising
the solver device.

14. An information processing method of calculating a solution to a target optimization problem for minimizing or maximizing a target objective function by an information processing device (20), the method comprising:

providing a solver device with an approximate problem for minimizing or maximizing an approximate function based on the target objective function, the solver device being configured to execute a solution-finding process for the approximate problem while iteratively updating an intermediate state of a solution;
acquiring, from the solver device, a plurality of intermediate solutions and a final solution, the intermediate solutions being based on the intermediate state of the solution calculated during execution of the solution-finding process for the approximate problem, the final solution representing a solution calculated after the plurality of intermediate solutions in the solution-finding process for the approximate problem;
calculating, for each of the plurality of intermediate solutions and the final solution, an evaluation value indicating an evaluation as a solution to the target optimization problem; and
outputting, as the solution to the target optimization problem, any selected solution selected from among the plurality of intermediate solutions and the final solution based on the evaluation value.

15. A program comprising computer-readable instructions to be executed by a computer, the instructions causing the computer to perform the method of claim 14.

16. Circuit information described in a hardware description language representing a configuration of a circuit, the circuit information causing the circuit to function as the information processing device (20) of any of claims 1 to 13.

**17.** Circuit information to be written into a reconfigurable semiconductor device to operate the reconfigurable semiconductor device, the circuit information causing the reconfigurable semiconductor device to function as the information processing device (20) of any of claims 1 to 13.

# FIG.1

N-SIZE PROBLEM

# FIG.2

# FIG.3

```
                    ┌──────────────┐
                    │    START     │
                    └──────────────┘
                           │
                           ▼
              ┌──────────────────────────┐
              │     ACQUIRE PROBLEM       │────S11
              └──────────────────────────┘
                           │
                           ▼
              ┌──────────────────────────┐
              │       INITIALIZE          │────S12
              └──────────────────────────┘
                           │
                           ▼
         ┌────────────────────────────────┐
    ┌ ─ ─│      ITERATE PROCESSING         │────S13
    ┊    └────────────────────────────────┘
    ┊                      │
    ┊                      ▼
    ┊         ┌──────────────────────────────┐
    ┊         │ PERFORM y-UPDATE PROCESSING   │────S14
    ┊         └──────────────────────────────┘
    ┊                      │
    ┊                      ▼
    ┊         ┌──────────────────────────────┐
    ┊         │ PERFORM x-UPDATE PROCESSING   │────S15
    ┊         └──────────────────────────────┘
    ┊                      │
    ┊                      ▼
    ┊         ┌──────────────────────────────┐
    ┊         │   PERFORM WALL PROCESSING     │────S16
    ┊         └──────────────────────────────┘
    ┊                      │
    ┊                      ▼
    ┊    ┌────────────────────────────────┐
    └ ─ ─│      ITERATE PROCESSING         │────S17
         └────────────────────────────────┘
                           │
                           ▼
              ┌──────────────────────────┐
              │         OUTPUT            │────S18
              └──────────────────────────┘
                           │
                           ▼
                    ┌──────────────┐
                    │     END      │
                    └──────────────┘
```

# FIG.4

# FIG.5

20      10      30

TARGET
OPTIMIZATION
PROBLEM

$J, h, y^{init}$

SOLVER DEVICE
(SIMULATED
BIFURCATION
MACHINE)

INFOR-
MATION
PROC-
ESSING
DEVICE

SOLUTION

$s^{opt}(x^{opt})$

$x_1 \bigcirc \quad \bigcirc y_1$

$x_2 \bigcirc \quad \bigcirc y_2$

$x_3 \bigcirc \quad \bigcirc y_3$

$x_4 \bigcirc \quad \bigcirc y_4$

$x_5 \bigcirc \quad \bigcirc y_5$

$x_6 \bigcirc \quad \bigcirc y_6$

FIG.6

# FIG.7

```
                        START

            ┌──────────────────────────┐
            │                          ▼
            │              ╱⌐S31
            │         ╱─────────────╲
            │        ╱  IS APPROXIMATE ╲    NO
            └───────⟨  PROBLEM ACQUIRED? ⟩──────┘
                     ╲                 ╱
                      ╲───────────────╱
                             │ YES
                             ▼        ⌐S32
                   ┌──────────────────────────┐
                   │ SET INTERMEDIATE STATE TO │
                   │    INITIALIZATION VALUE   │
                   └──────────────────────────┘
                             │        ⌐S33
                             ▼
                   ┌──────────────────────────┐
             ┌─────│  START SOLUTION-FINDING   │
             │     │         PROCESS           │
             │     └──────────────────────────┘
             │               │
             │               ▼          ⌐S34
             │          ╱─────────────╲
             │         ╱ IS SOLUTION-FINDING ╲  NO
             │        ⟨ PROCESS COMPLETED?     ⟩────┐
             │         ╲                     ╱      │
             │          ╲───────────────────╱      │
             │               │ YES    ⌐S37          ▼
             │     ┌──────────────────────┐    ╱──────────────╲
             │     │ OUTPUT FINAL SOLUTION │   ╱       IS        ╲  NO
             │     └──────────────────────┘  ⟨ INTERMEDIATE STATE ⟩──┐
             │               │                ╲ UPDATED PREDETERMINED╱ │
             │               ▼                 ╲     NUMBER        ╱   │
             │             END                  ╲   OF TIMES?    ╱    │
             │                                    ╲────────────╱      │
             │                                        │ YES   ⌐S36     │
             │                            ┌────────────────────────┐  │
             └────────────────────────────│ OUTPUT INTERMEDIATE SOLUTION │◄─┘
                                          └────────────────────────┘
```

# FIG.8

```
START
    │
    ▼  ⌐S41
ACQUIRE TARGET OPTIMIZATION
PROBLEM (OBJECTIVE FUNCTION
+CONSTRAINT CONDITION)
    │
    ▼  ⌐S42
CONVERT TARGET OPTIMIZATION
PROBLEM INTO APPROXIMATE PROBLEM
    │
    ▼  ⌐S43
INITIALIZE SOLUTION STORAGE UNIT AND
EVALUATION VALUE STORAGE UNIT
    │
    ▼  ⌐S44
START SOLUTION-FINDING PROCESS
    │
    ▼  ⌐S45
IS SOLUTION-FINDING PROCESS COMPLETED?  ──NO──▶
    │ YES
    ▼  ⌐S52
ACQUIRE FINAL SOLUTION
    │
    ▼  ⌐S53
IS CONSTRAINT CONDITION SATISFIED?  ──NO──▶
    │ YES
    ▼  ⌐S54
CALCULATE EVALUATION VALUE
    │
    ▼  ⌐S55
IS EVALUATION VALUE BEST?  ──NO──▶
    │ YES
    ▼  ⌐S56
OVERWRITE SELECTED SOLUTION
    │
    ▼  ⌐S57
DOES SELECTED SOLUTION EXIST?  ──NO──▶
    │ YES
    ▼  ⌐S58
OUTPUT SOLUTION
    │
    ▼
   END

─── NO branch (S45) ───▶
    ▼  ⌐S46
IS INTERMEDIATE SOLUTION OUTPUT?  ──NO──▶
    │ YES
    ▼  ⌐S47
ACQUIRE INTERMEDIATE SOLUTION
    │
    ▼  ⌐S48
IS CONSTRAINT CONDITION SATISFIED?  ──NO──▶
    │ YES
    ▼  ⌐S49
CALCULATE EVALUATION VALUE
    │
    ▼  ⌐S50
IS EVALUATION VALUE BEST?  ──NO──▶
    │ YES
    ▼  ⌐S51
OVERWRITE SELECTED SOLUTION

    ⌐S59
OUTPUT INFORMATION INDICATING NO SOLUTION
```

## FIG.9

RANGE SATISFYING
CONSTRAINT CONDITION

APPROXIMATE
FUNCTION WITH
LARGER COUPLING
COEFFICIENT

APPROXIMATE
FUNCTION WITH
SMALLER
COUPLING
COEFFICIENT

FUNCTION VALUE

0

VALUES OF MULTIPLE
DECISION VARIABLES

SEARCH RANGE OF
APPROXIMATE FUNCTION WITH
LARGER COUPLING COEFFICIENT

SEARCH RANGE OF APPROXIMATE
FUNCTION WITH SMALLER
COUPLING COEFFICIENT

## FIG.10

RANGE SATISFYING
CONSTRAINT CONDITION

SEARCH RANGE OF
APPROXIMATE
FUNCTION WITH
SMALLER COUPLING
COEFFICIENT

FUNCTION VALUE

0

VALUES OF MULTIPLE
DECISION VARIABLES

APPROXIMATE
FUNCTION WITH
SMALLER
COUPLING
COEFFICIENT

BEST
INTERMEDIATE
SOLUTION

FINAL SOLUTION
(CONSTRAINT VIOLATION
SOLUTION)

# FIG.11

# FIG.12

```
              ┌──────────┐
              │  START   │
              └──────────┘
                   │
                   ▼              ⌐S41
        ┌────────────────────────────┐
        │  ACQUIRE TARGET OPTIMIZATION│
        │  PROBLEM (OBJECTIVE FUNCTION│
        │   +CONSTRAINT CONDITION)    │
        └────────────────────────────┘
                   │
                   ▼              ⌐S61
        ┌────────────────────────────┐
        │ SET COUPLING COEFFICIENT TO │
        │       INITIAL VALUE         │
        └────────────────────────────┘
                   │
                   ▼              ⌐S62
        ┌────────────────────────────┐
        │ INITIALIZE HISTORY STORAGE  │
        │           UNIT              │
        └────────────────────────────┘
                   │
                   ▼              ⌐S42
        ┌────────────────────────────┐
        │  CONVERT TARGET OPTIMIZATION│
        │  PROBLEM INTO APPROXIMATE    │
        │         PROBLEM             │
        └────────────────────────────┘
                   │
                   ▼              ⌐S43
        ┌────────────────────────────┐
        │ INITIALIZE SOLUTION STORAGE │
        │ UNIT AND EVALUATION VALUE    │
        │       STORAGE UNIT          │
        └────────────────────────────┘
```

**S57** DOES SELECTED SOLUTION EXIST? — NO → **S65** MODIFY COUPLING COEFFICIENT TO BE LARGER

YES → **S63** STORE SELECTED SOLUTION AND EVALUATION VALUE IN HISTORY STORAGE UNIT

**S64** MODIFY COUPLING COEFFICIENT TO BE SMALLER

**S66** IS TERMINATION CONDITION REACHED? — NO

YES → **S67** DOES SOLUTION EXIST? — NO → **S69** OUTPUT INFORMATION INDICATING NO SOLUTION

YES → **S68** OUTPUT SOLUTION WITH BEST EVALUATION VALUE

END

# FIG.13

# FIG.14

```
                    START
                      │
                      ▼                        S71
        ┌──────────────────────────────┐
        │  ACQUIRE TARGET OPTIMIZATION  │
        │           PROBLEM            │
        └──────────────────────────────┘
                      │
                      ▼                        S72
        ┌──────────────────────────────┐
        │   CONVERT TARGET OPTIMIZATION │
        │  PROBLEM INTO APPROXIMATE     │
        │           PROBLEM            │
        └──────────────────────────────┘
                      │
                      ▼                        S73
        ┌──────────────────────────────┐
        │  INITIALIZE SOLUTION STORAGE UNIT │
        │ AND EVALUATION VALUE STORAGE UNIT │
        └──────────────────────────────┘
                      │
                      ▼                        S74
        ┌──────────────────────────────┐
        │  START SOLUTION-FINDING PROCESS │
        └──────────────────────────────┘
                      │
                      ▼                        S75
                 ╱IS          ╲        NO
            ╱ SOLUTION-FINDING PROCESS ╲─────────────────┐
            ╲    COMPLETED?    ╱                         │
                 ╲          ╱                            ▼           S76
                   │ YES                           ╱   IS      ╲    NO
                   ▼              S81          ╱ INTERMEDIATE SOLUTION ╲───┐
        ┌──────────────────────┐              ╲      OUTPUT?     ╱         │
        │  ACQUIRE FINAL SOLUTION │              ╲          ╱              │
        └──────────────────────┘                    │ YES                 │
                   │              S82                ▼          S77        │
        ┌──────────────────────┐          ┌──────────────────────────┐    │
        │ CALCULATE EVALUATION VALUE │     │ ACQUIRE INTERMEDIATE SOLUTION │ │
        └──────────────────────┘          └──────────────────────────┘    │
                   │                                 │           S78       │
                   ▼              S83                ▼                     │
               ╱ IS EVALUATION ╲   NO      ┌──────────────────────────┐    │
              ╲  VALUE BEST?  ╱────┐       │ CALCULATE EVALUATION VALUE │    │
                  ╲       ╱        │       └──────────────────────────┘    │
                   │ YES           │                 │                     │
                   ▼       S84     │                 ▼          S79        │
        ┌──────────────────────┐   │             ╱ IS EVALUATION ╲  NO     │
        │ OVERWRITE SELECTED SOLUTION │ │        ╲  VALUE BEST?  ╱──────────┤
        └──────────────────────┘   │             ╲       ╱                 │
                   │◄──────────────┘                 │ YES       S80       │
                   ▼       S85                       ▼                     │
        ┌──────────────────────┐          ┌──────────────────────────┐    │
        │    OUTPUT SOLUTION    │          │ OVERWRITE SELECTED SOLUTION │──┘
        └──────────────────────┘          └──────────────────────────┘
                   │
                   ▼
                  END
```

## FIG.15

## FIG.16

34

TARGET OBJECTIVE FUNCTION

32

SAMPLING UNIT
72

TRAINING DATASET

LEARNING UNIT
74

FUNCTION OF PREDETERMINED FUNCTION FORM

APPROXIMATE FUNCTION

APPROXIMATE PROBLEM OUTPUT UNIT
76

APPROXIMATE PROBLEM

30

FIG.17

FIG.18

34

TARGET OBJECTIVE FUNCTION 32 → SAMPLING UNIT 72 → FIRST TRAINING DATASET → LEARNING UNIT 74 → m-TH APPROXIMATE FUNCTION → APPROXIMATE PROBLEM OUTPUT UNIT 76 → m-TH APPROXIMATE PROBLEM → 30

p-TH TRAINING DATASET

FUNCTION OF PREDETERMINED FUNCTION FORM

RESAMPLING UNIT 84 ← p-TH SUBREGION ← RANGE IDENTIFICATION UNIT 82 ← SELECTED SOLUTION ← 64

EP 4 708 083 A1

# FIG.19

```
                    START

                                    S91
        ACQUIRE TARGET OPTIMIZATION PROBLEM

                                    S92
            INITIALIZE HISTORY STORAGE UNIT

                                    S93
          GENERATE FIRST TRAINING DATASET BY
                      SAMPLING

                                    S94
       GENERATE FIRST APPROXIMATE FUNCTION BY
         TRAINING FUNCTION OF PREDETERMINED
                   FUNCTION FORM

                                    S95
         GENERATE FIRST APPROXIMATE PROBLEM

                                    S73
         INITIALIZE SOLUTION STORAGE UNIT AND
           EVALUATION VALUE STORAGE UNIT

                    ⋮

                                    S82
            CALCULATE EVALUATION VALUE

                                    S96
           IS EVALUATION VALUE BEST?          NO

                      YES       S97
            OVERWRITE SELECTED SOLUTION

                                    S98
        STORE SELECTED SOLUTION AND EVALUATION
             VALUE IN HISTORY STORAGE UNIT

                                    S99
             IS TERMINATION                   NO
          CONDITION REACHED?

                      YES       S104
         OUTPUT SELECTED SOLUTION WITH BEST
       EVALUATION VALUE AS SOLUTION OF TARGET
              OPTIMIZATION PROBLEM

                    END
```

$p$-TH branch (S99 NO):

```
                                           S100
        DETERMINE p-TH SUBREGION BASED ON
               SELECTED SOLUTION

                                           S101
          GENERATE p-TH TRAINING DATASET BY
             SAMPLING FOR p-TH SUBREGION

                                           S102
       GENERATE p-TH APPROXIMATE FUNCTION BY
       TRAINING (p-1)-TH APPROXIMATE FUNCTION

                                           S103
         GENERATE p-TH APPROXIMATE PROBLEM
```

# FIG.20

EP 4 708 083 A1

# FIG.21

START

ACQUIRE TARGET OPTIMIZATION PROBLEM (OBJECTIVE FUNCTION +CONSTRAINT CONDITION) — S41

CONVERT TARGET OPTIMIZATION PROBLEM INTO APPROXIMATE PROBLEM — S42

INITIALIZE SOLUTION STORAGE UNIT AND EVALUATION VALUE STORAGE UNIT — S43

START SOLUTION-FINDING PROCESS — S44

IS SOLUTION-FINDING PROCESS COMPLETED? — S45
  - NO →
  - YES ↓

IS INTERMEDIATE SOLUTION OUTPUT? — S46
  - NO →
  - YES ↓

ACQUIRE INTERMEDIATE SOLUTION — S47

IS CONSTRAINT CONDITION SATISFIED? — S48
  - NO →
  - YES ↓

CALCULATE EVALUATION VALUE — S49

IS IT BETTER THAN EVALUATION REFERENCE VALUE? — S111
  - YES →
  - NO ↓

IS EVALUATION VALUE BEST? — S50
  - NO →
  - YES ↓

OVERWRITE SELECTED SOLUTION — S51

OUTPUT SOLUTION — S112

ACQUIRE FINAL SOLUTION — S52

IS CONSTRAINT CONDITION SATISFIED? — S53
  - NO →
  - YES ↓

CALCULATE EVALUATION VALUE — S54

IS EVALUATION VALUE BEST? — S55
  - NO →
  - YES ↓

OVERWRITE SELECTED SOLUTION — S56

DOES SELECTED SOLUTION EXIST? — S57
  - NO →
  - YES ↓

OUTPUT SOLUTION — S58

OUTPUT INFORMATION INDICATING NO SOLUTION — S59

END

# FIG.22

INTERMEDIATE STATE

APPROXIMATE FUNCTION

TARGET OBJECTIVE FUNCTION

FUNCTION VALUE

EVALUATION REFERENCE VALUE

0

VALUES OF MULTIPLE DECISION VARIABLES

SOLUTION BEING OUTPUT

# FIG.23

20

| CPU ﹝401 | RAM ﹝402 | ROM ﹝403 |

STORAGE DEVICE ﹝404

COMMUNICATION INTERFACE DEVICE ﹝405

Europäisches
Patentamt

European
Patent Office

Office européen
des brevets

# EUROPEAN SEARCH REPORT

**Application Number**

EP 25 19 4693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 043667 A (TOSHIBA CORP; TOSHIBA DIGITAL SOLUTIONS CORP) 18 March 2021 (2021-03-18) * paragraphs [0002] - [0113] * ----- | 1-17 | INV. G06F17/11 |
| A | EP 4 386 583 A1 (TOSHIBA KK [JP]) 19 June 2024 (2024-06-19) * paragraphs [0001] - [0102] * ----- | 1-17 | |

**TECHNICAL FIELDS SEARCHED (IPC)**

G06F

The present search report has been drawn up for all claims

| Place of search | Date of completion of the search | Examiner |
|---|---|---|
| The Hague | 27 January 2026 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 4693

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | | Publication date | Patent family member(s) | | Publication date |
|---|---|---|---|---|---|
| JP 2021043667 | A | 18-03-2021 | CN | 112789610 A | 11-05-2021 |
| | | | JP | 7421291 B2 | 24-01-2024 |
| | | | JP | 7688740 B2 | 04-06-2025 |
| | | | JP | 2021043667 A | 18-03-2021 |
| | | | JP | 2024038360 A | 19-03-2024 |
| | | | US | 2021182356 A1 | 17-06-2021 |
| | | | US | 2025371101 A1 | 04-12-2025 |
| | | | WO | 2021049063 A1 | 18-03-2021 |
| EP 4386583 | A1 | 19-06-2024 | EP | 4386583 A1 | 19-06-2024 |
| | | | JP | 2024084000 A | 24-06-2024 |
| | | | US | 2024193222 A1 | 13-06-2024 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021060864 A
- JP 2019145010 A
- JP 2019159566 A
- JP 2021043667 A
- JP 2021043589 A

### Non-patent literature cited in the description

- **HAYATO GOTO** ; **KOSUKE TATSUMURA** ; **ALEXANDER R. DIXON**. Combinatorial optimization by simulating adiabatic bifurcations in nonlinear Hamiltonian systems. *Science Advances*, 2019, vol. 5, 2372
- **HAYATO GOTO** ; **KOTARO ENDO** ; **MASARU SUZUKI** ; **YOSHISATO SAKAI** ; **TARO KANAO** ; **YOHEI HAMAKAWA** ; **RYO HIDAKA** ; **MASAYA YAMASAKI** ; **KOSUKE TATSUMURA**. High-performance combinatorial optimization based on classical mechanics. *Science Advances*, 2021, vol. 7, 7953
- **H. ISHIKAWA**. Higher-Order Clique Reduction Without Auxiliary Variables. *Proceedings of the IEEE Conference on Computer Vision and Pattern Recognition (CVPR 2014)*, 2014
- **BAPTISTA, R.** ; **POLOCZEK, M.** Bayesian optimization of combinatorial structures. *Proceedings of the International Conference on Machine Learning (ICML), PMLR*, July 2018, 462-471
- **KADOWAKI, T.** ; **AMBAI, M.** Lossy compression of matrices by black box optimisation of mixed integer nonlinear programming. *Scientific Reports*, 2022, vol. 12 (1)
- **KOKI KITAI** ; **JIANG GUO** ; **SHENGHONG JU** ; **SHU TANAKA** ; **KOJI TSUDA** ; **JUNICHIRO SHIOMI** ; **RYO TAMURA**. Designing metamaterials with quantum annealing and factorization machines. *Physical Review Research*, 16 March 2020, vol. 2, 013319, https://doi.org/10.1103/PhysRevResearch.2.013319